(19) Europäisches Patentamt
European Patent Office
Office européen des brevets

(11) Veröffentlichungsnummer : **0 155 317**
**B1**

(12) **EUROPÄISCHE PATENTSCHRIFT**

(45) Veröffentlichungstag der Patentschrift : **08.07.87**

(51) Int. Cl.⁴ : **C 09 K 19/30**, C 09 K 19/12, C 09 K 19/20, C 07 C 49/00

(21) Anmeldenummer : **84903542.3**

(22) Anmeldetag : **08.09.84**

(86) Internationale Anmeldenummer : **PCT/EP 84/00272**

(87) Internationale Veröffentlichungsnummer : **WO/8501295 (28.03.85 Gazette 85/08)**

# (54) FLÜSSIGKRISTALLMISCHUNGEN UND NEUE ANISOTROPE VERBINDUNGEN FÜR DIESE.

(30) Priorität : **10.09.83 DE 3332690**

(43) Veröffentlichungstag der Anmeldung : **25.09.85 Patentblatt 85/39**

(45) Bekanntmachung des Hinweises auf die Patenterteilung : **08.07.87 Patentblatt 87/28**

(84) Benannte Vertragsstaaten : **CH FR GB LI**

(56) Entgegenhaltungen :
**EP-A- 0 019 060**
**EP-A- 0 022 183**
**Chemical Abstracts, vol. 83, no. 12, 22 September 1975, Columbus, Ohio (US), H. Schubert et al.: "2,5-Diarythiophene liquid crystals", page 607, abstract 106547n**

(73) Patentinhaber : **Merck Patent Gesellschaft mit beschränkter Haftung**
**Frankfurter Strasse 250**
**D-6100 Darmstadt (DE)**

(72) Erfinder : **HUYNH-BA, Tuong**
**47 Chemin des Osches**
**CH-1009 Pully (CH)**
Erfinder : **OSMAN, Maged, A.**
**Lerchenrain 1**
**CH-8046 Zürich (CH)**

**EP 0 155 317 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft Flüssigkristallmischungen (FK-Mischungen) für elektrooptische Anzeigen, welche Mischungen mindestens eine querpolarisierte Verbindung enthalten.

Die Erfindung betrifft auch anisotrope querpolarisierte Verbindungen, und zwar Ketone, welche die eben genannte Bedingung erfüllen.

Für den Betrieb von elektrooptischen Anzeigen der verschiedenen Typen werden bekanntlich FK-Mischungen benötigt, die anisotrope Verbindungen enthalten. Die Bezeichnung « anisotrop » bedeutet hierbei, dass eine gegebene Verbindung enantiotrop flüssigkristallin oder potentiell flüssigkristallin ist ; potentiell flüssigkristallin ist eine Verbindung dann, wenn sie entweder in der Schmelze unterkühlbar und im unterkühlten Zustand flüssigkristallin ist (monotrop flüssigkristallin) oder bei Bestimmung des Klärpunktes einer Mischung aus der potentiell flüssigkristallinen Verbindung und einer enantiotrop flüssigkristallinen Verbindung eine z. B. durch Extrapolation nachweisbare Mesophase zeigt. Für elektrooptische Anzeigen muss die FK-Mischung ferner mindestens teilweise aus längspolarisierten oder/und querpolarisierten Komponenten bestehen, die selbst flüssigkristallin oder wenigstens potentiell flüssigkristallin sind, d. h. sich in Mischung mit flüssigkristallinen Verbindungen wie flüssigkristalline Verbindungen verhalten.

Die Polarisierung anisotroper Verbindungen wird dadurch erzielt, dass das anisotrope Molekül polarisierend wirkende Substituenten trägt ; je nach dem, ob eine Längspolarisierung, d. h. eine Polarisierung des anisotropen Moleküls in Richtung der Moleküllängsachse oder eine Querpolarisierung, d. h. quer zur Moleküllängsachse wirkend, oder aber eine Kombination von Längs- und Querpolarisierung des anisotropen Moleküls gewünscht wird, werden die polarisierenden Gruppen häufig als sogenannte Flügelsubstituenten oder als sogenannte laterale Substituenten eingebaut.

Die auf diese Weise resultierende Polarisierung des anisotropen Moleküls äussert sich in den Dielektrizitätskonstanten (DK) des Moleküls, parallel zur Molekülachse gemessen und als $\varepsilon_{\parallel}$ bezeichnet oder/und senkrecht zur Molekülachse gemessen und dann als $\varepsilon_{\perp}$ bezeichnet.

Die Anisotropie dieser Dielektrizitätskonstanten (auch als DKA oder $\Delta\varepsilon$ bezeichnet) ist die Differenz $\Delta\varepsilon = \varepsilon_{\parallel} - \varepsilon_{\perp}$. Je nach Art der elektrooptischen Anzeige werden anisotrope Verbindungen mit positiven oder mit negativen DKA-Werten benötigt, d. h. es überwiegt entweder der Beitrag von $\varepsilon_{\parallel}$ oder der von $\varepsilon_{\perp}$ und jeder dieser Werte kann grundsätzlich unsignifikant klein sein.

Für den sogenannten Multiplexbetrieb ist es vorteilhaft, dass der Beitrag von $\varepsilon_{\perp}$ auch bei insgesamt positiver DKA signifikant ist ; je kleiner $\Delta\varepsilon/\varepsilon_{\perp}$, desto steiler ist die Kontrastkurve. Es versteht sich, dass bei anisotropen Verbindungen mit insgesamt negativer DKA der Beitrag von $\varepsilon_{\perp}$ stets signifikant ist. Für die Zwecke der vorliegenden Erfindung werden solche anisotropen Verbindungen als « querpolarisiert » bezeichnet, die mindestens eine polarisierende Gruppe enthalten, welche mehr zu $\varepsilon_{\perp}$ als zu $\varepsilon_{\parallel}$ beiträgt, und zwar gleichgültig, ob die DKA insgesamt positiv oder insgesamt negativ ist.

Praktisch alle bekannten anisotropen Verbindungen für Flüssigkristallmischungen enthalten zwei bis vier cyclische Reste, die durch Brückenglieder (Kovalenzbindungen oder bestimmte zweiwertige Gruppen) miteinander verknüpft sind und Flügelgruppen nach dem allgemeinen Schema I

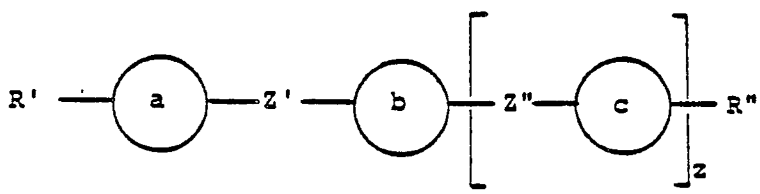

(I)

tragen, in welchem R′, R″ die Flügelgruppen darstellen, a, b und c die cyclischen Reste sind und Z′, Z″ die Brückenglieder bedeuten ; z ist 0, 1 oder 2.

Im typischen Fall wird die Längspolarisierung, d. h. der Beitrag zu $\varepsilon_{\parallel}$, durch eine stark polarisierende endständige Gruppe, wie die Cyanogruppe, am einen Molekülende (als R′ oder R″) und eine Alkyl- oder Alkoxygruppe am anderen Molekülende (R″ oder R′) bewirkt.

Die Querpolarisierung erfolgt allgemein durch polarisierende Substituenten in « lateraler » Position, und zwar bisher praktisch immer durch ringständige Substituenten, wie Cyano oder Halogenatome, meist Fluor oder Chlor, an den aromatischen cyclischen Resten, meist Benzolringen, nach dem Schema II

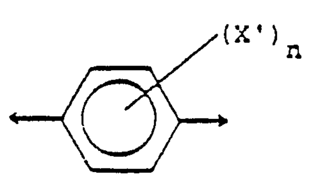

(II)

in der X′ die polarisierende Gruppe ist, n 1 oder 2 bedeutet und die Pfeile annähernd der Moleküllängsachse entsprechen.

Aus dem Schema II ergibt sich ohne weiteres, dass diese übliche Art der Querpolarisierung mit dem Ziel der Erhöhung von $\varepsilon_\perp$, z. B. für anisotrope Substanzen mit insgesamt negativer DKA oder für anisotrope Substanzen mit positiver DKA und gleichzeitig möglichst kleinen Werten des Verhältnisses $\Delta\varepsilon/\varepsilon_\perp$, stets zwangsläufig zu einer erheblichen Verbreiterung des Moleküls führt, die nachteilig ist, weil sie zu einer Erniedrigung des Klärpunktes führt und weitere Nachteile zur Folge haben kann. Auch die Beschränkung der Querpolarisierung nach Schema II auf das Vorhandensein mindestens eines aromatischen Ringes im Molekül kann nachteilig wirken.

Die Wünschbarkeit von anisotropen Verbindungen mit positiver DKA und möglichst geringen Werten von $\Delta\varepsilon/\varepsilon_\perp$ ist z. B. in der EP-A-0 019 665 der Anmelderin erläutert und wird dort durch Kombination von Längs- und Querpolarisierung mit ringständigen Substituenten erzielt.

Aber auch bei Längspolarisierung ohne Querpolarisierung des Moleküls ergeben sich Probleme dann, wenn beispielsweise eine Cyanogruppe an einem cycloaliphatischen Rest hängen soll. Bekanntlich bietet der Ersatz der aromatischen Ringe durch cycloaliphatische Reste verschiedene Vorteile, wie niedrigere Viskosität und verminderte optische Anisotropie ; es zeigt sich aber, dass Cyanogruppen an cycloaliphatischen Resten zu einer Erniedrigung des Klärpunktes führen oder sogar ein Verschwinden der Mesophase bewirken können. Es wäre daher wünschbar, die Quer- oder/und Längspolarisierung von anisotropen Verbindungen mindestens teilweise durch solche polarisierenden Substituenten bzw. mit solchen Positionen dieser Substituenten am anisotropen Molekül zu bewirken, welche die Nachteile der bekannten Substituenten zu vermeiden oder zu verringern gestatten.

Aufgabe der Erfindung ist es, FK-Mischungen für elektrooptische Anzeigen anzugeben, die mindestens eine querpolarisierte Verbindung enthalten, bei welcher die Querpolarisierung mindestens teilweise von einer polarisierenden Gruppe stammt, welche die Nachteile der bekannten querpolarisierenden Gruppen nicht oder nur in wesentlich geringerem Masse besitzt und weitere Vorteile, wie vereinfachte Synthesemethoden, bietet. Zur Aufgabe der Erfindung gehören auch neue querpolarisierte Verbindungen, welche die eben genannten Anforderungen erfüllen.

Im Zuge der zur vorliegenden Erfindung führenden Untersuchungen wurde zunächst gefunden, dass entgegen der vorherrschenden Meinung der Fachwelt eine ausreichende Querpolarisierung anisotroper Moleküle keineswegs nur durch ringständige laterale Substituenten möglich ist, sondern dass solche Substituenten auch in Flügelgruppen oder/und den Brückengruppen zwischen den Ringen eine Querpolarisierung bieten, die wahlweise für negative DKA- oder verminderte $\Delta\varepsilon/\varepsilon_\perp$-Werte ausgenützt werden kann, und zwar ohne die Nachteile einer Verbreiterung des Moleküls und ohne Beschränkung auf aromatische Ringe.

Ueberraschenderweise wurde ferner festgestellt, dass die Querpolarisierung in Flügelgruppen oder/und Brückengliedern nunmehr die Verwendung einer an sich in der FK-Technik bekannten Gruppe, nämlich der Carbonylgruppe von Ketostrukturen

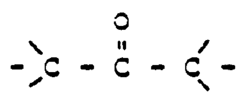

als querpolarisierende Gruppe bietet ; diese der Erfindung zugrundeliegende Erkenntnis ist aus mehreren Gründen überraschend :

1) Die in der Flüssigkristalltechnik notorische Carboxyl- oder Oxycarbonylgruppe erzeugt keine ausgeprägte Querpolarisierung, obwohl sie die Carbonylgruppe enthält ;

2) verschiedene Ketone sind in der FK-Technik bekannt, werden aber lediglich als Zwischenprodukte, z. B. für die Herstellung der « klassischen » FK-Verbindungen (I), verwendet ;

3) Ketoverbindungen wurden bereits als Komponenten von FK-Mischungen für dynamische Streuzellen vorgeschlagen, wobei die Ketostruktur aber lediglich die Funktion eines Getters oder Komplexbildners für bestimmte Ionen hatte.

Es war daher offensichtlich nicht naheliegend, Ketoverbindungen der unten angegebenen Formel (1) gemäss der Erfindung als querpolarisierende Komponente in FK-Mischungen zu verwenden, obwohl das Dipolmoment der Carbonylgruppe etwa 3 Debye (D) beträgt und damit fast doppelt so hoch ist wie der von Halogenatomen (F ≈ 1,4 D) und dem Dipolmoment der Cyanogruppe (~ 4 D) nahekommt, aber ohne deren nachteilige Voluminosität.

Bei dem Carbonyl von Carboxyl- oder Oxycarbonylgruppen, die in der FK-Technik häufig als Brückenglied dienen, tritt hingegen praktisch keine Querpolarisierung in Erscheinung, was aufgrund des Konformationsschemas (III)

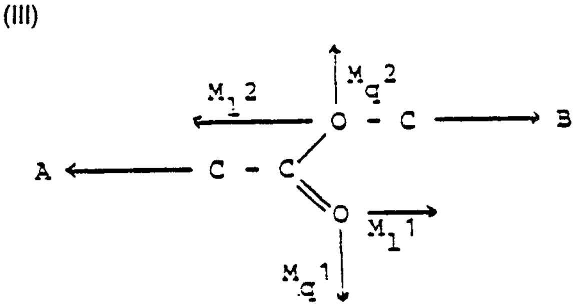

(III)

verständlich wird, in welchem die Pfeile A-B die Richtung der Moleküllängsachse andeuten und $M_q$ 1 bzw. $M_q$ 2 die querpolarisierend wirkenden Vektoren und $M_\perp$ 1 bzw. $M_\perp$ 2 die längspolarisierend wirkenden Vektoren der Dipolmomente der Carboxy-Carbonylgruppe bzw. deren Oxygruppe darstellen ; die Carbonyloxy- (d. h. Carboxyl) oder Oxycarbonylgruppe bedingt mit anderen Worten, dass die Vektoren des Dipolmoments der Carbonylgruppe in diesen Strukturen zu einem erheblichen Teil durch die praktisch entgegengesetzt wirkenden Vektoren der Oxygruppe (—O—) kompensiert werden.

Weiter wurde gefunden, dass sich die Carbonylgruppen von Aldehyden sowie von α- und β-Diketonen (siehe z. B. EP-A-0 019 060) für Flüssigkristallmischungen mit stabiler Mesophase nicht eignen, weil derartige Verbindungen in allgemein chemischer bzw. thermischer oder fotochemischer Hinsicht zu labil oder/und mit anderen üblichen Komponenten von FK-Mischungen unverträglich sind oder unerwünschte Verunreinigungen einschleppen.

Die erfindungsgemässe FK-Mischung für elektrooptische Anzeigen enthält bevorzugt mindestens eine anisotrope querpolarisierte Ketoverbindung der Formel (1)

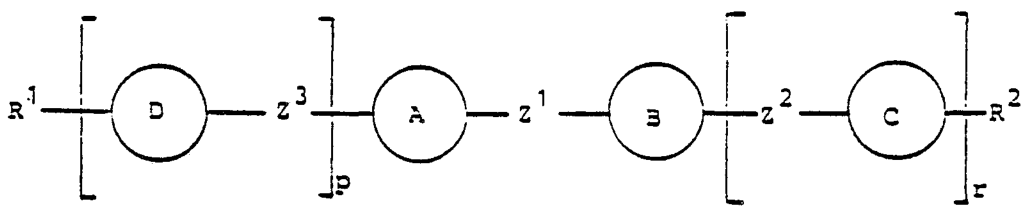

(1)

die wie folgt definiert ist :

Die Indizes p und r sind gleich oder verschieden und bedeuten jeweils Null oder Eins ; für viele Zwecke wird bevorzugt, dass p oder r Null ist ; die Ringe A, B und C sind cycloaliphatische Reste der Formeln (1a) und (1b)

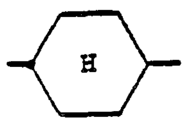

(Ia)

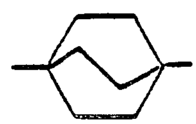

(Ib)

d. h. trans-1,4-Cyclohexyl- und 1,4-Bicyclo(2,2,2)octyl-Reste oder gegebenenfalls im Rahmen der folgenden Massgaben aromatische Reste der Formeln (1c), (1d), (1e)

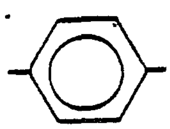

(Ic)

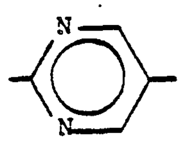

(Id)

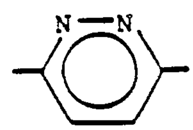

(Ie)

d. h. 1,4-Phenyl-, 2,5-Pyrimidin- und 3,6-Pyridazinyl-Reste ; die Brücken $Z^1$, $Z^2$ und $Z^3$ bedeuten Kovalenzbindungen oder Gruppen der Formeln

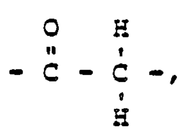,

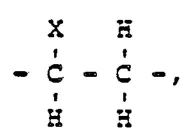,

$-CH_2O-$ und $-C(O)O-$

oder deren Umkehrung, soweit nicht durch die unten genannten Maßgaben ausgeschlossen ; X bedeutet Wasserstoff oder eine der Bedeutungen des Restes $X^1$, der ein Fluor- oder Chloratom oder die Cyanogruppe ist ; $R^1$, $R^2$ sind gleich oder verschieden und gewählt aus Wasserstoff, Fluor, Chlor, Cyano sowie den Alkyl-, Alkoxy-, Alkoxycarbonyl- oder Alkylcarbonyloxygruppen, deren Alkylteil 1-12 C-Atome in gerader oder verzweigter und gegebenenfalls chiraler Kette besitzt, die gegebenenfalls durch ein oder zwei Substituenten $X^1$, d. h. Fluor, Chlor oder Cyano, substituiert ist, wobei jedes C-Atom des Alkylteils aber höchstens jeweils einen Substituenten $X^1$ tragen darf ; der Alkylteil kann ferner 1-2 Ketocarbonyle (—C(O)—) enthalten, wobei α-Ketostrukturen und β-Ketostrukturen ausgeschlossen sind, d. h. zwei

Ketocarbonyle im gleichen Alkylteil durch mindestens zwei Ketten-C-Atome voneinander getrennt sind.

Die C-Kette des Alkylteils kann dementsprechend durch Ketocarbonyl unterbrochen sein oder, wenn $R^1$, $R^2$ Alkyl bedeuten, ein Ketocarbonyl als Verbindungsglied zum benachbarten Ring enthalten ; wenn die Alkylkette Teil einer Alkoxy-, Alkoxycarbonyl- oder Alkylcarbonyloxygruppe ist, enthält sie vorzugsweise keine Ketocarbonylgruppe ; jedenfalls müssen zwischen der Carbonylgruppe einer Alkoxycarbonyl- (Alkyl—OC(O)—) oder Alkylcarbonyloxygruppe (Alkyl—C(O)O—) und einer Ketocarbonylgruppe desselben Alkylteils ebenfalls mindestens zwei, vorzugsweise jeweils nicht direkt mit Sauerstoff verbundene und auch nicht durch $X^1$ substituierte C-Atome liegen.

Für erfindungsgemässe FK-Mischungen gelten ferner folgende Massgaben (a) bis (d) :

a) Das Molekül der Formel (1) enthält insgesamt mindestens eine Ketocarbonylgruppe, die wahlweise Teil einer Brükkengruppe $Z^1$, $Z^2$, $Z^3$ oder Teil einer Flügelgruppe $R^1$, $R^2$ sein kann ; im allgemeinen wird bevorzugt, dass das Molekül der Formel (1) insgesamt höchstens zwei Ketocarbonylgruppen und insgesamt höchstens zwei Substituenten $X^1$ in den Brücken- oder/und Flügelgruppen enthält ;

b) an keinen im Molekül der Formel (1) vorhandenen cycloaliphatischen Rest der Formeln (1a) oder/und (1b) ist gleichzeitig direkt Sauerstoff einerseits und direkt Sauerstoff oder der Rest $X^1$ andererseits gebunden ; das Molekül darf mit anderen Worten keine Strukturen der Formeln

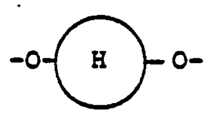 und 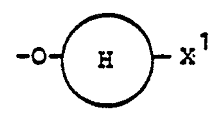

enthalten, in welchen die Ringe H Reste der Formeln (1a) oder (1b) sind ;

c) an keinen im Molekül der Formel (1) vorhandenen aromatischen Rest der Formeln (1c), (1d) oder (1e) ist eine Gruppe der Formeln $—CH_2O—$ oder $—CH(X^1)—$ direkt mit dem C-Atom dieser Gruppen gebunden, ausser wenn $X^1$ das Fluoratom ist ; das Molekül darf mit anderen Worten keine Ringe der Formeln

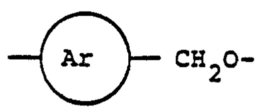 und 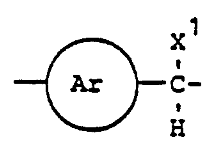

enthalten, wobei Ar ein Rest der Formeln (1c), (1d) oder (1e) und $X^1$ Cyano oder Chlor aber nicht Fluor ist.

Die obigen Massgaben (a) und (b) sind dadurch begründet, dass Verbindungen der Formel (1), welche diesen Massgaben nicht entsprechen, ungenügend stabil sind oder zu tiefe Klärpunkte haben.

Ferner gilt für erfindungsgemässe FK-Mischungen die Massgabe

d) : die Verbindung der Formel (1) muss mindestens einen cycloaliphatischen Rest, d. h. einen solchen der Formeln (1a) oder/und (1b), enthalten ; erfindungsgemäss wurde festgestellt, dass Verbindungen der Formel (1), die ausschliesslich aromatische Ringe enthalten, eine zu starke Neigung zur Bildung smektischer Phasen sowie zu hohe Viskositätswerte haben.

Verbindungen der Formel (1) gemäss der obigen Definition sind zum Teil als solche bekannt, z. B. als Vorstufen in der Synthese von anisotropen Verbindungen. Die Verwendung der an sich bekannten Verbindungen der Formel (1) als querpolarisierte Komponente in FK-Mischungen ist aber neu und war aus den oben dargelegten Gründen keineswegs naheliegend.

So ist beispielsweise aus DE-OS 29 27 277 das 4'-(4-trans-Pentylcyclohexyl)biphenyl-4-yl-methylketon der Formel (110)

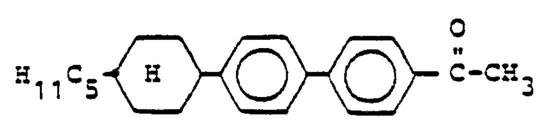

(110)

als Vorstufe zur Herstellung der gemäss der genannten DE-OS herzustellenden Verbindung der Formel (510)

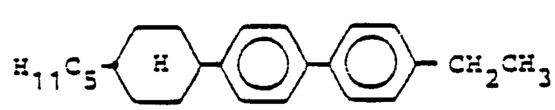

(510)

durch Hydrieren bekannt. Die Tatsache, dass die Ketocarbonylgruppe in der nur als Synthesevorstufe für (510) vorbeschriebenen Verbindung (110) eine ausgeprägte Querpolarisierung des Moleküls verursacht,

wurde aber bisher nicht bemerkt. Die Verwendung der bekannten Verbindung der Formel (110) als querpolarisierte Komponente ist daher neu und eine FK-Mischung, welche die Verbindung der Formel (110) als querpolarisierte Komponente enthält, ist erfindungsgemäss. Dies gilt selbstverständlich auch für analoge aber nicht vorbeschriebene Verbindungen, wie z. B. das 4'-(4-trans-Pentylcyclohexyl)biphenyl-4-yl-ethyl-keton (Klärpunkt 235 °C), das 4'-(4-trans-Pentylcyclohexyl)biphenyl-4-yl-butyl-keton (Klärpunkt 209 °C), das 4'-(4-trans-Hexylcyclohexyl)biphenyl-4-yl-methyl-keton (Schmelzpunkt 128 °C, Klärpunkt 202 °C), das 4'-(4-trans-Heptylcyclohexyl)biphenyl-4-yl-heptyl-keton (Schmelzpunkt 127 °C, Klärpunkt 201 °C) und die Untergruppe erfindungsgemäss verwendbarer Verbindungen der Formel (101)

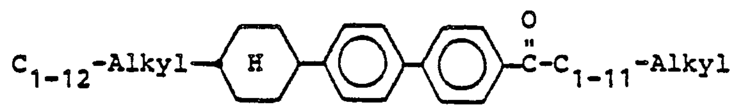
(101)

Ebenfalls als solche bekannt sind z. B. aus J. Physique 36 (1975) 379 die anisotropen Ketone der Formel (102)

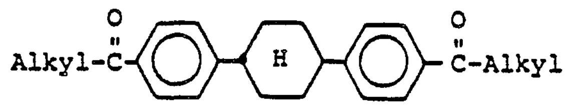
(102)

die für Alkyle mit 1-11 C-Atomen als querpolarisierte Komponenten erfindungsgemässer FK-Mischungen geeignet sind.

Zur Erfindung gehören ferner neue anisotrope Ketoverbindungen, d. h. solche der Formel (1) mit der oben gegebenen Definition und einer zusätzlichen Massgabe zur Ausklammerung der an sich bekannten Ketoverbindungen. Diese Massgabe lautet :

(e) $Z^1$, $Z^2$ und $Z^3$ sind nicht gleichzeitig Kovalenzbindungen, wenn p oder r Null ist und das Molekül zwei Reste der Formel (1c) und einen Rest der Formel (1a) enthält, wobei $R^1$ und $R^2$ gewählt sind aus $C_1$-$C_{11}$-Alkyl—C(O)— und $C_1$-$C_{12}$-Alkyl.

Zur Unterscheidung zwischen den an sich bekannten anisotropen Ketoverbindungen zur erfindungsgemäßen Verwendung in FK-Mischungen und den entsprechenden erfindungsgemäßen neuen anisotropen Ketoverbindungen werden die letzteren durch die Formel (11) gekennzeichnet, die sich von der oben erläuterten Formel (1) lediglich durch die zusätzliche Maßgabe (e) unterscheidet.

Besonders bevorzugte Verbindungen der Formel (11) sind diejenigen, worin $Z^1$, $Z^2$ und $Z^3$ gleichzeitig Kovalenzbindungen sind, insbesondere jedoch erfindungsgemäße Verbindungen der Formel

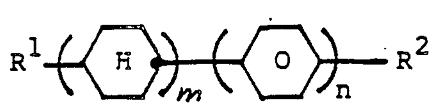

worin $R^1$ die Bedeutung der Formel (2), $R^2$ die in Anspruch 2 angegebene Bedeutung hat, m und n jeweils 0, 1 oder 2 bedeuten und m + n 2, 3 oder 4 ist.

Vorzugsweise ist m = 1 und n 1 oder 2 oder m = 2 und n 1 oder 0. $R^1$ ist vorzugsweise n-Alkanoyl mit 1-12 C-Atomen. $R^2$ ist vorzugsweise n-Alkyl oder n-Alkanoyl mit 1-12 C-Atomen.

Vorzugsweise enthalten Verbindungen der Formel (11) insgesamt höchstens zwei Ketocarbonylgruppen und insgesamt höchstens zwei Reste $X^1$. Vorzugsweise bedeutet höchstens eines von $R^1$, $R^2$ Wasserstoff oder $X^1$.

Bevorzugte Verbindungen der Formel (11) sind dadurch gekennzeichnet, daß p oder/und r Null ist.

Beide Ausführungsformen der Erfindung, d. h. sowohl die FK-Mischungen mit mindestens einer an sich bekannten oder neuen Verbindung (1) als querpolarisierte Komponente als auch die neuen Verbindungen (11), bieten insbesondere die folgenden Vorteile :

starke Querpolarisierung durch die Ketocarbonylgruppe, was wahlweise zum Erzielen einer insgesamt negativen DKA oder in Kombination mit längspolarisierend wirkenden Flügelgruppen zum Erzielen einer insgesamt positiven DKA bei gleichzeitig niedrigen Werten von $\Delta\varepsilon/\varepsilon_\perp$ ausgenützt werden kann ;

keine Verbreiterung des Moleküls durch ringständige laterale Substituenten ;

vergleichsweise einfachere Synthese von Verbindungen mit seitengruppenständigem oder brückengruppenständigem Ketocarbonyl als querpolarisierender Gruppe, und

inhärent hohe chemische Stabilität von Ketonen.

Im allgemeinen ist die Wirkung der Ketocarbonylgruppe(n) zur Querpolarisierung, d. h. der Beitrag zu $\varepsilon_\perp$, in der Verbindung (1) bzw. (11) stärker, wenn die Ketocarbonylgruppe(n) relativ nahe einer cyclischen Gruppe steht bzw. stehen. Aus diesem Grunde wird für hohe $\varepsilon_\perp$-Beiträge bevorzugt, dass die Ketocarbonylgruppe durch höchstens zwei Kettenatome vom nächsten Ring beabstandet ist ; dies ist bei brückenständigem Ketocarbonyl, d. h. wenn $Z^1$, $Z^2$ oder $Z^3$ = —C(O)$CH_2$—, stets und bei flügelgruppenständigem Ketocarbonyl dann der Fall, wenn eine der folgenden Seitenkettenstrukturen vorliegt :

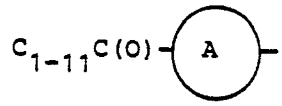

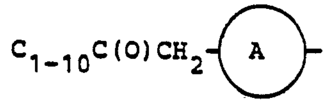

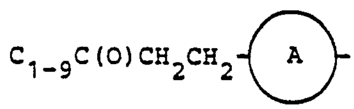

Gleiches gilt sinngemäss für $X^1$ in einem Brückenglied oder einer Flügelgruppe. Dies schliesst aber die Verwendung von relativ weiter vom benachbarten Ring stehenden zusätzlichen Ketocarbonylgruppen nicht aus.

Bei einer bevorzugten Gruppe von Verbindungen der Formel (1) bzw. (11) entspricht mindestens eine der Flügelgruppen $R^1$, $R^2$ der Formel (2)

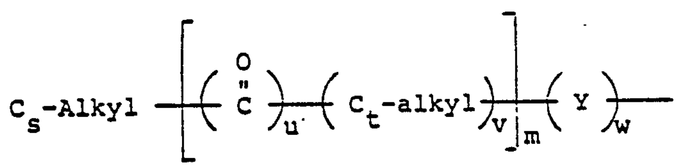

(2)

in der die Indizes u, v, w gleich oder verschieden und Null oder Eins sind, m Eins oder Zwei ist, Y die Ketocarbonylgruppe (—C(O)—), die Oxycarbonylgruppe (—OC(O)—) oder die Carbonyloxygruppe (—C(O)O—) bedeutet und die Indizes s und t Zahlen von 1 bis 12 bedeuten, wobei die Gesamtzahl der C-Atome in der Formel (2) nicht grösser als 12 ist ; ferner gilt für Formel (2), dass wenn w Eins ist und u Eins ist, dann auch v Eins bedeutet und t mindestens gleich Zwei ($t \geq 2$) sein muss. Für viele Zwecke wird bevorzugt, dass m Eins bedeutet. Vorzugsweise entspricht eine der Flügelgruppen $R^1$, $R^2$ der Formel (2), während das andere von $R^1$, $R^2$ eine $C_{1-12}$-Alkylkette bedeutet.

Ebenfalls bevorzugt wird, dass entweder w Null bedeutet und dann m, v sowie u jeweils Eins sind und t höchstens Zwei ist ($t \leq 2$), oder dass wenn w Eins ist, Y die Ketocarbonylgruppe bedeutet und dann u sowie v jeweils Null sind.

Eine maximale Kettenlänge (endständige Wasserstoffgruppen nicht einbezogen) von 12 Atomen wird für $R^1$ oder/und $R^2$ allgemein bevorzugt ; dabei ist es für den Fall, dass $R^1$ und $R^2$ solche Ketten darstellen, zweckmässig, dass diese jeweils unterschiedliche Kettenlängen haben.

Allgemeine bevorzugte Beispiele für $R^1$ oder/und $R^2$ mit Alkylteilen sind $C_{1-12}$-Alkyl-, $C_{1-11}$-Alkyl-C(O)—, $C_{1-11}$-Alkyl—O—, $C_{1-10}$-Alkyl—OC(O)—, $C_{1-10}$-Alkyl—C(O)O—.

Spezielle Beispiele für « Alkyl » in diesen Formeln sind somit Methyl-, Ethyl-, Propyl-, Butyl-, Pentyl-, Hexyl-, Heptyl-, Octyl-, Nonyl-, Decyl-, Undecyl- und Dodecylgruppen einschliesslich der isomeren bzw. chiralisomeren Alkyle, wie 1-Methylpropyl, 1-Methylbutyl, 2-Methylbutyl, 1-Methylpentyl, 2-Methylpentyl, 3-Methylpentyl, 1- oder 2- oder 3- oder 4-Methylhexyl, 1- oder 2- oder 3- oder 4- oder 5-Methylheptyl sowie die nach diesem Prinzip gebildeten weiteren Alkylgruppen mit asymmetrischem C-Atom.

Aus diesen Beispielen können sinngemäss auch die $C_s$-Alkyle der Formel (2) gewählt werden ; die $C_t$-Alkyle von Formel (2) sind vorzugsweise unverzweigt. Beispiele für $X^1$-substituierte Alkylteile von $R^1$, $R^2$ in Formel (1) bzw. $C_s$ oder $C_t$ in Formel (2) sind Monofluoralkyl-, Difluoralkyl-, Monochloralkyl-, Dichloralkyl-, Cyanoalkyl- und Dicyanoalkylteile.

Eine gegebenenfalls für Verbindungen (1) bzw. (11) mit insgesamt positiver DKA und geringen Werten von $\Delta\varepsilon/\varepsilon_{\perp}$ gewünschte Verstärkung der Längspolarisierung, d. h. die Erhöhung des Beitrages zu $\varepsilon_{/\!/}$, kann allgemein am ausgeprägtesten dadurch erzielt werden, dass $R^1$ oder $R^2$ die für $X^1$ angegebene Bedeutung, insbesondere CN, hat oder dass eine der genannten Flügelgruppen einen substituierten Alkylteil darstellt, in welchem mindestens eine substituierende Gruppe $X^1$ funktionell längspolarisierend angeordnet ist ; diese Bezeichnung bedeutet, dass der Vektor des Dipol- oder Polarisierungsmoments der Gruppe eine signifikante, parallel zur Moleküllängsachse wirkende Komponente hat.

Bevorzugte Mischungen enthalten mindestens eine Verbindung der Formel (1), worin höchstens eines von $R^1$, $R^2$ Wasserstoff oder $X^1$ bedeutet. Bevorzugte Mischungen enthalten mindestens eine Verbindung der Formel (1), worin beide $R^1$, $R^2$ der Formel (2) entsprechen oder solche, worin eines von $R^1$, $R^2$ der Formel (2) entspricht und das andere von $R^2$, $R^1$ eine $C_{1-12}$-Alkylkette bedeutet. Bevorzugte

Mischungen enthalten mindestens eine Verbindung der Formel (1), worin p oder/und r Null ist.

Erfindungsgemäße FK-Mischungen enthalten bevorzugt mindestens eine Verbindung der Formel (1), z. B. in Anteilen von 1-30 Gew.%, wobei die Mischung auch mehrere verschiedene Verbindungen der Formel (1), z. B. in einem Anteil von bis insgesamt 90 Gew.%, vorzugsweise bis insgesamt 47 Gew.%, enthalten kann. Als weitere Komponenten können die erfindungsgemäßen FK-Mischungen bekannte anisotrope Verbindungen sowie die dem Verwendungszweck entsprechenden Zusätze, wie Farbstoffe, insbesondere pleochroitische Farbstoffe, optisch aktive bzw. cholesterische Komponenten und dergleichen, enthalten. Die FK-Mischungen können in an sich bekannter Weise, z. B. durch einfaches Vermischen der Komponenten, gegebenenfalls unter Erwärmen, hergestellt und in ebenfalls an sich bekannter Weise als dielektrische Phase in die Zellen der bekannten elektrooptischen Anzeigen der verschiedenen Typen eingefüllt werden.

Die erfindungsgemäßen FK-Mischungen bestehen aus 2 bis 20, vorzugsweise 3 bis 15 Komponenten, darunter mindestens einer Verbindung der Formel I. Die anderen Bestandteile werden vorzugsweise ausgewählt aus den nematischen oder nematogenen Substanzen, insbesondere den bekannten Substanzen aus den Klassen der Azoxybenzole, Benzylidenaniline, Biphenyle, Terphenyle, Phenyl- oder Cyclohexylbenzoate, Cyclohexan-carbonsäurephenyl- oder -cyclohexyl-ester, Phenylcyclohexane, Cyclohexylbiphenyle, Cyclohexylcyclohexane, Cyclohexylnaphthaline, 1,4-Bis-cyclohexylbenzole, 4,4'-Biscyclohexylbiphenyle, Phenyl-oder Cyclohexylpyrimidine, Phenyl- oder Cyclohexyldioxane, gegebenenfalls halogenierten Stilbene, Benzylphenylether, Tolane und substituierten Zimtsäuren.

Die wichtigsten als Bestandteile derartiger FK-Mischungen in Frage kommenden Verbindungen lassen sich durch die Formel I' charakterisieren,

$$R^5—L—G—E—R^6 \qquad I'$$

worin L und E je ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituiertem Naphthalin, Di- und Tetrahydronaphthalin, Chinazolin und Tetrahydrochinazolin gebildeten Gruppe,

| | |
|---|---|
| —CH=CH— | —N(O)=N— |
| —CH=CY— | —CH=N(O)— |
| —C=C— | $—CH_2—CH_2—$ |
| —CO—O— | $—CH_2—O—$ |
| —CO—S— | $—CH_2—S—$ |
| —CH=N— | —COO—Phe—COO— |

oder eine C-C-Einfachbildung, Y Halogen, vorzugsweise Chlor, oder -CN, und $R^5$ und $R^6$ Alkyl, Alkoxy, Alkanoyloxy oder Alkoxycarbonyloxy mit bis zu 18, vorzugsweise bis zu 8 Kohlenstoffatomen, oder einer dieser Reste auch CN, NC, $NO_2$, $CF_3$, F, Cl oder Br bedeuten.

Bei den meisten dieser Verbindnungen sind $R^5$ und $R^6$ voneinander verschieden, wobei einer dieser Reste meist eine Alkyl- oder Alkoxygruppe ist. Aber auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Durch geeignete Zusätze können die flüssigkristallinen Dielektrika nach der Erfindung so modifiziert werden, daß sie in allen bisher bekannt gewordenen Arten von Flüssigkristallanzeigeelementen verwendet werden können.

Derartige Zusätze sind dem Fachmann bekannt und in der Literatur ausführlich beschrieben. Beispielsweise können Leitsalze, vorzugsweise Ethyl-dimethyl-dodecylammonium-4-hexyloxybenzoat, Tetrabutylammonium-tetraphenylboranat oder Komplexsalze von Kronenethern (vgl. z. B. I. Haller et al., Mol. Cryst. Liq. Cryst. Band 24, Seiten 249-258 (1973)) zur Verbesserung der Leitfähigkeit, dichroitische Farbstoffe zur Herstellung farbiger Guest-Host-Systeme oder Substanzen zur Veränderung der dielektrischen Anisotropie, der Viskosität und/oder der Orientierung der nematischen Phasen zugesetzt werden. Derartige Substanzen sind zum Beispiel in den DE-OS 22 09 127, 22 40 864, 23 21 632, 23 38 281, 24 50 088, 26 37 430, 28 53 728 und 29 02 177 beschrieben.

Die Herstellung der bekannten Verbindungen der Formel (1) bedarf keiner besonderen Erläuterung ; die neuen erfindungsgemäßen Verbindungen (11) können allgemein in analoger Weise wie die bekannten Verbindungen (1) erhalten werden. Man kann ganz allgemein die Verbindungen aus entsprechenden, miteinander reaktionsfähigen Blöcken, d. h. Teilverbindungen, aufbauen oder durch Modifizieren von entsprechenden Vorverbindungen gewinnen.

Einige allgemeine Synthesewege sind anhand der folgenden Schemata 1-6 erläutert :

(Siehe Schemata 1-6 Seite 9 f.)

1. 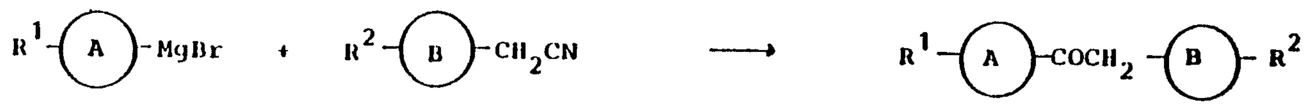

2. 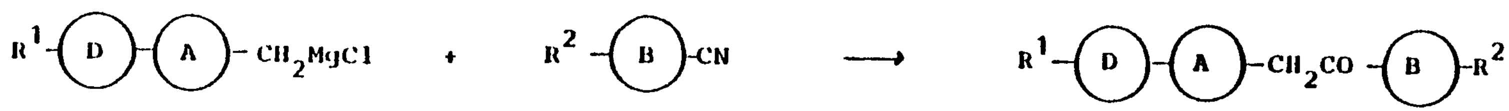

3. 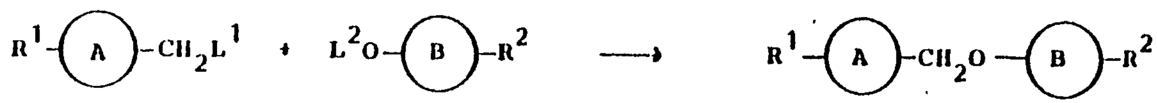

4. 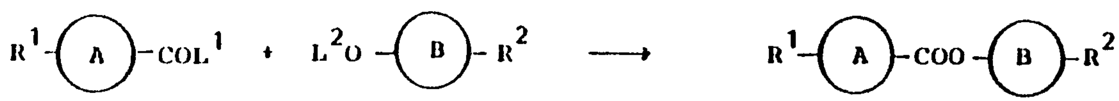

5. 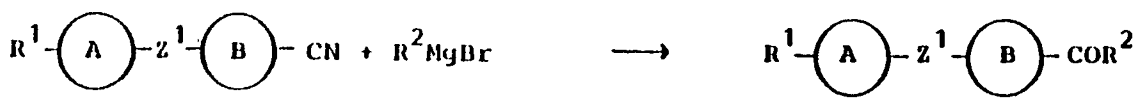

6. 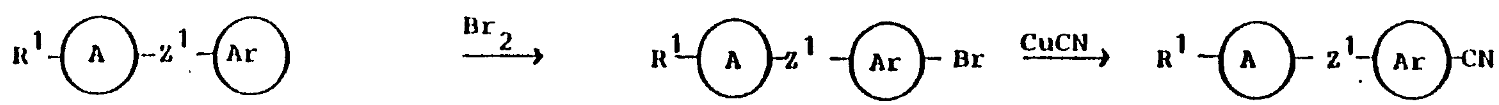


Ar bedeutet einen aromatischen Rest der Formeln (1c), (1d) oder (1e) ; $L^1$ und $L^2$ sind Abgangsgruppen und die anderen Zeichen A, B, D, $Z^1$, $R^1$, $R^2$ haben die oben angegebene Bedeutung.

In den Schemata haben die Ringe A, B, die Reste $R^1$, $R^2$ und die Brücke $Z^1$ die oben angegebene Bedeutung ; $L^1$ und $L^2$ sind Abgangsgruppen der für solche Synthesen üblichen Art.

Die folgenden Beispiele sollen die Erfindung erläutern, ohne sie zu begrenzen. Schmp. = Schmelzpunkt, Klp. = Klärpunkt. Vor- und nachstehend bedeuten Prozentangaben Gewichtsprozent ; alle Temperaturen sind in Grad Celsius angegeben. « Übliche Aufarbeitung » bedeutet : man gibt Wasser hinzu, extrahiert mit Methylenchlorid, trennt ab, trocknet die organische Phase, dampft ein und reinigt das erhaltene Produkt, falls erforderlich, durch Chromatographie an Kieselgel.

Beispiel 1

Herstellung von 4-(4-trans-Pentylcyclohexyl)phenyl-ethyl-keton

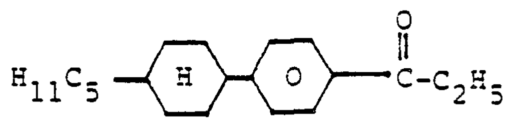

Zu einer Suspension von 15 g wasserfreiem $AlCl_3$ in 200 ml Dichlormethan wurden bei 10 °C unter Rühren 23 g 4-(4-n-Pentylcyclohexyl)benzol gelöst ; zu der Lösung wurden 7,9 g Acetylchlorid langsam zugetropft. Nach Beendigung der Reaktion wurde das Reaktionsgemisch auf eine Lösung aus 30 ml konzentriertem HCl in 250 ml Eiswasser gegossen. Die organische Phase wurde abgetrennt, gewaschen, getrocknet und eingedampft. Das zurückbleibende Rohprodukt wurde umkristallisiert, Schmp. 56,6 °C, Klp. 68,8 °C, $\Delta\varepsilon = +1,3$.

Analog werden hergestellt :

4-(4-trans-Heptylcyclohexyl)phenyl-methyl-keton
4-(4-trans-Heptylcyclohexyl)phenyl-ethyl-keton, Schmp. 52,2°, Klp. 73,0°
4-(4-trans-Heptylcyclohexyl)phenyl-propyl-keton
4-(4-trans-Heptylcyclohexyl)phenyl-butyl-keton
4-(4-trans-Heptylcyclohexyl)phenyl-hexyl-keton
4-(4-trans-Pentylcyclohexyl)phenyl-methyl-keton
4-(4-trans-Pentylcyclohexyl)phenyl-propyl-keton
4-(4-trans-Pentylcyclohexyl)phenyl-butyl-keton
4-(4-trans-Pentylcyclohexyl)phenyl-pentyl-keton
4-(4-trans-Pentylcyclohexyl)phenyl-hexyl-keton
4-(4-trans-Pentylcyclohexyl)phenyl-heptyl-keton
4-(4-trans-Propylcyclohexyl)phenyl-methyl-keton
4-(4-trans-Propylcyclohexyl)phenyl-ethyl-keton
4-(4-trans-Propylcyclohexyl)phenyl-propyl-keton
4-(4-trans-Propylcyclohexyl)phenyl-butyl-keton
4-(4-trans-Propylcyclohexyl)phenyl-pentyl-keton
4-(4-trans-Propylcyclohexyl)phenyl-hexyl-keton
4-(4-trans-Propylcyclohexyl)phenyl-heptyl-keton
4-(4-trans-Pentanoylcyclohexyl)phenyl-methyl-keton
4-(4-trans-Pentanoylcyclohexyl)phenyl-ethyl-keton, Schmp. 98,7°, Klp. 60° (monotrop)
4-(4-trans-Pentanoylcyclohexyl)phenyl-propyl-keton
4-(4-trans-Pentanoylcyclohexyl)phenyl-butyl-keton
4-(4-trans-Pentanoylcyclohexyl)phenyl-pentyl-keton
4-(4-trans-Pentanoylcyclohexyl)phenyl-hexyl-keton
4-(4-trans-Propionylcyclohexyl)phenyl-methyl-keton
4-(4-trans-Propionylcyclohexyl)phenyl-ethyl-keton
4-(4-trans-Propionylcyclohexyl)phenyl-propyl-keton
4-(4-trans-Propionylcyclohexyl)phenyl-butyl-keton
4-(4-trans-Propionylcyclohexyl)phenyl-pentyl-keton
4-(4-trans-Propionylcyclohexyl)phenyl-hexyl-keton
4-(4-trans-Hexanoylcyclohexyl)phenyl-methyl-keton
4-(4-trans-Hexanoylcyclohexyl)phenyl-ethyl-keton Schmp. 66,4°, Klp. 63,8° (monotrop)
4-(4-trans-Hexanoylcyclohexyl)phenyl-propyl-keton
4-(4-trans-Hexanoylcyclohexyl)phenyl-butyl-keton
4-(4-trans-Hexanoylcyclohexyl)phenyl-pentyl-keton
4-(4-trans-Hexanoylcyclohexyl)phenyl-hexyl-keton
4-(4-trans-Propionylcyclohexyl)biphenyl-4'-yl-methyl-keton
4-(4-trans-Propionylcyclohexyl)biphenyl-4'-yl-ethyl-keton
4-(4-trans-Propionylcyclohexyl)biphenyl-4'-yl-propyl-keton
4-(4-trans-Propionylcyclohexyl)biphenyl-4'-yl-butyl-keton

4-(4-trans-Propionylcyclohexyl)biphenyl-4'-yl-pentyl-keton
4-(4-trans-Propionylcyclohexyl)biphenyl-4'-yl-hexyl-keton
4-(4-trans-Pentanoylcyclohexyl)biphenyl-4'-yl-methyl-keton
4-(4-trans-Pentanoylcyclohexyl)biphenyl-4'-yl-ethyl-keton
4-(4-trans-Pentanoylcyclohexyl)biphenyl-4'-yl-propyl-keton
4-(4-trans-Pentanoylcyclohexyl)biphenyl-4'-yl-butyl-keton
4-(4-trans-Pentanoylcyclohexyl)biphenyl-4'-yl-pentyl-keton
4-(4-trans-Pentanoylcyclohexyl)biphenyl-4'-yl-hexyl-keton.

Beispiel 2

Herstellung von 4-trans-Pentyl-trans-bicyclohexyl-ethyl-keton

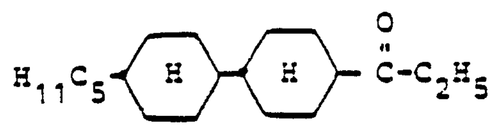

22 g Ethylbromid wurden zu einer Suspension von 5 g Magnesium in 50 ml trockenem Ethyläther bei Raumtemperatur unter Rühren zugetropft. Zu vorbereitetem Ethylmagnesiumbromid wurde eine Lösung von 6 g 4-n-Pentyl-trans, trans-bicyclohexyl-4'-carbonitril in 30 ml trockenem Ethyläther zugetropft und über Nacht gerührt. Nach Beendigung der Reaktion wurden 20 ml 2N HC1 unter Kühlung zugegeben und die organische Phase abgetrennt, gewaschen, getrocknet und eingedampft. Das Rohprodukt wurde zur Gewinnung des Zielproduktes umkristallisiert, Schmp. 55 °C, Klp. 93,7 °C, $\Delta\varepsilon$ = —1,8.

Analog werden hergestellt :

4-trans-Pentyl-trans-bicyclohexyl-methyl-keton
4-trans-Pentyl-trans-bicyclohexyl-propyl-keton
4-trans-Pentyl-trans-bicyclohexyl-butyl-keton
4-trans-Pentyl-trans-bicyclohexyl-pentyl-keton
4-trans-Pentyl-trans-bicyclohexyl-hexyl-keton
4-trans-Pentyl-trans-bicyclohexyl-heptyl-keton
4-trans-Heptyl-trans-bicyclohexyl-methyl-keton
4-trans-Heptyl-trans-bicyclohexyl-ethyl-keton
4-trans-Heptyl-trans-bicyclohexyl-propyl-keton
4-trans-Heptyl-trans-bicyclohexyl-butyl-keton
4-trans-Heptyl-trans-bicyclohexyl-pentyl-keton
4-trans-Heptyl-trans-bicyclohexyl-hexyl-keton
4-trans-Heptyl-trans-bicyclohexyl-heptyl-keton
4-trans-Butyl-trans-bicyclohexyl-methyl-keton
4-trans-Butyl-trans-bicyclohexyl-ethyl-keton
4-trans-Butyl-trans-bicyclohexyl-propyl-keton
4-trans-Butyl-trans-bicyclohexyl-butyl-keton
4-trans-Butyl-trans-bicyclohexyl-pentyl-keton
4-trans-Butyl-trans-bicyclohexyl-hexyl-keton
4-trans-Butyl-trans-bicyclohexyl-heptyl-keton
4-trans-Propyl-trans-bicyclohexyl-methyl-keton
4-trans-Propyl-trans-bicyclohexyl-ethyl-keton, Schmp. 63,2°, Klp. 82,9°
4-trans-Propyl-trans-bicyclohexyl-propyl-keton
4-trans-Propyl-trans-bicyclohexyl-butyl-keton
4-trans-Propyl-trans-bicyclohexyl-pentyl-keton
4-trans-Propyl-trans-bicyclohexyl-hexyl-keton
4-trans-Propyl-trans-bicyclohexyl-heptyl-keton
4-trans-Ethyl-trans-bicyclohexyl-methyl-keton
4-trans-Ethyl-trans-bicyclohexyl-ethyl-keton
4-trans-Ethyl-trans-bicyclohexyl-propyl-keton
4-trans-Ethyl-trans-bicyclohexyl-butyl-keton
4-trans-Ethyl-trans-bicyclohexyl-pentyl-keton
4-trans-Ethyl-trans-bicyclohexyl-hexyl-keton
4-trans-Ethyl-trans-bicyclohexyl-heptyl-keton
4-trans-Ethoxy-trans-bicyclohexyl-methyl-keton
4-trans-Ethoxy-trans-bicyclohexyl-ethyl-keton

4-trans-Ethoxy-trans-bicyclohexyl-propyl-keton
4-trans-Ethoxy-trans-bicyclohexyl-butyl-keton
4-trans-Ethoxy-trans-bicyclohexyl-pentyl-keton
4-trans-Ethoxy-trans-bicyclohexyl-hexyl-keton
4-trans-Ethoxy-trans-bicyclohexyl-heptyl-keton
4-trans-Butoxy-trans-bicyclohexyl-methyl-keton
4-trans-Butoxy-trans-bicyclohexyl-ethyl-keton
4-trans-Butoxy-trans-bicyclohexyl-propyl-keton
4-trans-Butoxy-trans-bicyclohexyl-butyl-keton
4-trans-Butoxy-trans-bicyclohexyl-pentyl-keton
4-trans-Butoxy-trans-bicyclohexyl-hexyl-keton
4-trans-Butoxy-trans-bicyclohexyl-heptyl-keton
4-trans-Propionyl-trans-bicyclohexyl-methyl-keton
4-trans-Propionyl-trans-bicyclohexyl-ethyl-keton
4-trans-Propionyl-trans-bicyclohexyl-propyl-keton
4-trans-Propionyl-trans-bicyclohexyl-butyl-keton
4-trans-Propionyl-trans-bicyclohexyl-pentyl-keton
4-trans-Propionyl-trans-bicyclohexyl-hexyl-keton
4-trans-Propionyl-trans-bicyclohexyl-heptyl-keton
4-trans-Pentanoyl-trans-bicyclohexyl-methyl-keton
4-trans-Pentanoyl-trans-bicyclohexyl-ethyl-keton
4-trans-Pentanoyl-trans-bicyclohexyl-propyl-keton
4-trans-Pentanoyl-trans-bicyclohexyl-butyl-keton
4-trans-Pentanoyl-trans-bicyclohexyl-pentyl-keton
4-trans-Pentanoyl-trans-bicyclohexyl-hexyl-keton
4-trans-Pentanoyl-trans-bicyclohexyl-heptyl-keton
4-trans-(p-Propylphenyl)-cyclohexyl-methyl-keton
4-trans-(p-Propylphenyl)-cyclohexyl-ethylketon
4-trans-(p-Propylphenyl)-cyclohexyl-propyl-keton
4-trans-(p-Propylphenyl)-cyclohexyl-butyl-keton, Schmp. 29°, $\Delta\varepsilon$ = —1,8
4-trans-(p-Propylphenyl-cyclohexyl-pentyl-keton
4-trans-(p-Propylphenyl-cyclohexyl-hexyl-keton
4-trans-(p-Propylphenyl-cyclohexyl-heptyl-keton
4-trans-(p-Butylphenyl)-cyclohexyl-methyl-keton
4-trans-(p-Butylphenyl)-cyclohexyl-ethyl-keton
4-trans-(p-Butylphenyl)-cyclohexyl-propyl-keton
4-trans-(p-Butylphenyl)-cyclohexyl-butyl-keton
4-trans-(p-Butylphenyl)-cyclohexyl-pentyl-keton
4-trans-(p-Butylphenyl)-cyclohexyl-hexyl-keton
4-trans-(p-Butylphenyl)-cyclohexyl-heptyl-keton
4-trans-(p-Pentylphenyl)-cyclohexyl-methyl-keton, Schmp. 31°, $\Delta\varepsilon$ = —1,0
4-trans-(p-Pentylphenyl)-cyclohexyl-ethyl-keton
4-trans-(p-Pentylphenyl)-cyclohexyl-propyl-keton
4-trans-(p-Pentylphenyl)-cyclohexyl-butyl-keton
4-trans-(p-Pentylphenyl)-cyclohexyl-pentyl-keton
4-trans-(p-Pentylphenyl)-cyclohexyl-hexyl-keton
4-trans-(p-Pentylphenyl)-cyclohexyl-heptyl-keton
4-trans-(4'-Propylbiphenyl-4-yl)-cyclohexyl-methyl-keton
4-trans-(4'-Propylbiphenyl-4-yl)-cyclohexyl-ethyl-keton
4-trans-(4'-Propylbiphenyl-4-yl)-cyclohexyl-propyl-keton
4-trans-(4'-Propylbiphenyl-4-yl)-cyclohexyl-butyl-keton
4-trans-(4'-Propylbiphenyl-4-yl)-cyclohexyl-pentyl-keton
4-trans-(4'-Propylbiphenyl-4-yl)-cyclohexyl-hexyl-keton
4-trans-(4'-Propylbiphenyl-4-yl)-cyclohexyl-heptyl-keton.

## Beispiel 3

Herstellung von 4-(4-trans-Pentylcyclohexyl)phenyl-chlormethyl-keton

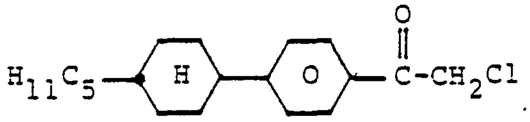

Analog der in Beispiel 1 angegebenen Arbeitsweise wurde diese Zielverbindung, Schmp. 81,6 °C, hergestellt.

Analog werden hergestellt :

4-(4-trans-Propylcyclohexyl)phenyl-chlormethyl-keton
4-(4-trans-Propylcyclohexyl)phenyl-cyanmethyl-keton
4-(4-trans-Propylcyclohexyl)phenyl-2-cyanethyl-keton.

## Beispiel 4

Zu einer aus 41 g trans-1-Brommethyl-4-n-pentylcyclohexan [(Sdp. 122°/7 mbar), erhältlich durch Umsetzung von trans-4-n-Pentylcyclohexyl-methanol (Sdp. 140°/10 mbar) mit Phosphorpentabromid in Dichlormethan. trans-4-n-Pentyl-cyclohexylmethanol ist durch Reduktion von trans-4-n-Pentylcyclohexancarbonsäure mit Lithiumalanat erhältlich] und 8 g Magnesium in 400 ml Diethylether hergestellten Grignard-Lösung tropft man 35 g trans, trans-4-(4-n-Propylcyclohexyl)-Cyclohexancarbonitril (gelöst in 300 ml Toluol) und destilliert anschließend so lange Lösungsmittel ab, bis eine Kopftemperatur von 95° erreicht wird. Es wird noch 9 Stunden unter Rückfluß erhitzt und anschließend mit Ammoniumchloridlösung hydrolysiert. Übliche Aufarbeitung der organischen Phase ergibt 26 g 1-(trans, trans-4-n-Propylbicyclohexyl)-2-(trans-4-n-pentyl-cyclohexyl)-ethan-1-on, Schmp. 95°, Klp. 127°.

Analog werden hergestellt :

1-(trans,trans-4-Ethylbicyclohexyl)-2-(trans-4-n-pentyl-cyclohexyl)-ethan-1-on
1-(trans,trans-4-n-Butylbicyclohexyl)-2-(trans-4-n-pentylcyclohexyl)-ethan-1-on, Schmp. 180°
1-(trans,trans-4-n-Pentylbicyclohexyl)-2-(trans-4-n-pentylcyclohexyl)-ethan-1-on
1-(trans,trans-4-n-Hexylbicyclohexyl)-2-(trans-4-n-pentylcyclohexyl)-ethan-1-on
1-(trans,trans-4-n-Heptylbicyclohexyl)-2-(trans-4-n-pentylcyclohexyl)-ethan-1-on
1-(trans,trans-4-Ethylbicyclohexyl)-2-(trans-4-n-propylcyclohexyl)-ethan-1-on
1-(trans,trans-4-n-Propylbicyclohexyl)-2-(trans-4-n-propylcyclohexyl)-ethan-1-on
1-(trans-trans-4-n-Butylbicylohexyl)-2-(trans-4-n-propylcyclohexyl)-ethan-1-on
1-(trans,trans-4-n-Pentylbicyclohexyl)-2-(trans-4-n-propylcyclohexyl)-ethan-1-on
1-(trans,trans-4-n-Hexylbicyclohexyl)-2-(trans-4-n-propylcyclohexyl)-ethan-1-on
1-(trans,trans-4-n-Heptylbicyclohexyl)-2-(trans-4-n-propylcyclohexyl)-ethan-1-on
1-(trans,trans-4-Ethylbicyclohexyl)-2-(trans-4-n-heptylcyclohexyl)-ethan-1-on
1-(trans,trans-4-n-Propylbicyclohexyl)-2-(trans-4-n-heptylcyclohexyl)-ethan-1-on
1-(trans,trans-4-n-Butylbicyclohexyl)-2-(trans-4-n-heptylcyclohexyl)-ethan-1-on
1-(trans,trans-4-n-Pentylbicyclohexyl)-2-(trans-4-n-heptylcyclohexyl)-ethan-1-on
1-(trans,trans-4-n-Hexylbicyclohexyl)-2-(trans-4-n-heptylcyclohexyl)-ethan-1-on
1-(trans,trans-4-n-Heptylbicyclohexyl)-2-(trans-4-n-heptylcyclohexyl)-ethan-1-on
2-(p-(trans-4-n-Propylcyclohexylphenyl)-1-(trans-4-n-pentylcyclohexyl)-ethan-1-on, Schmp. 105°.

## Beispiel 5

Zu einer Suspension von 16 g Aluminiumchlorid in 13 ml Dichlormethan wird bei -5° unter Rühren eine Lösung von 21,4 g 4-n-Butylphenylessigsäurechlorid in 8 ml Dichlormethan gegeben. Nach 30 Minuten wird zu diesem Reaktionsgemisch eine Lösung von 20,2 g 4-(trans-4-n-Propylcyclohexyl)-benzol in 46,5 ml Dichlormethan so zugetropft, daß die Temperatur des Reaktionsgemisches nicht über 0° steigt. Anschließend wird noch eine Stunde bei 0° nachgerührt und das Reaktionsgemisch dann in eine Mischung aus 250 g Eis und 75 ml 35 % wäßrige Salzsäure gegossen. Die organische Phase wird abgetrennt, mit Wasser neutral gewaschen, über Natriumsulfat getrocknet und eingedampft. Das zurückbleibende 2-(4-n-Butylphenyl)-4′-(trans-4-n-propylcyclohexyl)-acetophenon wird aus Ethanol umkristallisiert ; Ausbeute 23,7 g.

Analog werden hergestellt :

2-(4-Ethylphenyl)-4′-(trans-4-n-propylcyclohexyl)-acetophenon
2-(4-n-Propylphenyl)-4′-(trans-4-n-propylcyclohexyl)-acetophenon
2-(4-n-Pentylphenyl)-4′-(trans-4-n-propylcyclohexyl)-acetophenon
2-(4-n-Hexylphenyl)-4′-(trans-4-n-propylcyclohexyl)-acetophenon
2-(4-n-Heptylphenyl)-4′-(trans-4-n-propylcyclohexyl)-acetophenon
2-(4-Ethylphenyl)-4′-(trans-4-n-pentylcyclohexyl)-acetophenon
2-(4-n-Propylphenyl)-4′-(trans-4-n-pentylcyclohexyl)-acetophenon
2-(4-n-Butylphenyl)-4′-(trans-4-n-pentylcyclohexyl)-acetophenon

2-(4-n-Pentylphenyl)-4'-(trans-4-n-pentylcyclohexyl)-acetophenon
2-(4-n-Hexylphenyl)-4'-(trans-4-n-pentylcyclohexyl)-acetophenon
2-(4-n-Heptylphenyl)-4'-(trans-4-n-pentylcyclohexyl)-acetophenon
2-(4-Ethylphenyl)-4'-(trans-4-n-heptylcyclohexyl)-acetophenon
2-(4-n-Propylphenyl)-4'-(trans-4-n-heptylcyclohexyl)-acetophenon
2-(4-n-Butylphenyl)-4'-(trans-n-heptylcyclohexyl)-acetophenon
2-(4-n-Pentylphenyl)-4'-(trans-n-heptylcyclohexyl)-acetophenon
2-(4-n-Hexylphenyl)-4'-(trans-4-n-heptylcyclohexyl)-acetophenon
2-(4-n-Heptylphenyl)-4'-(trans-4-n-heptylcyclohexyl)-acetophenon

## Beispiel 6

Eine Lösung von trans-4-n-Propylcyclohexylacetylchlorid (0,015 mol) (hergestellt aus der entsprechenden Säure mit überschüssigem Thionylchlorid) und 4-Bromdiphenyl (0,014 mol) in Dichlormethan (60 ml) wurde tropfenweise zu einer Lösung von Aluminiumtrichlorid (0,023 mol) in Dichlormethan (20 ml) zugesetzt, worauf in einem Eisbad angekühlt wurde. Das Reaktionsgemisch wurde 18 h gerührt und danach auf ein Gemisch von 20 Vol.-% Salzsäure und Eis/Wasser (200 ml) aufgegossen und 0,5 h gerührt.

Das wäßrige Gemisch wurde mit Chloroform (dreimal 80 ml) ausgeschüttelt, worauf die vereinigten Chloroformextrakte mit Wasser gewaschen und über wasserfreiem Natriumsulfat getrocknet wurden. Nach Abtrennung des Lösungsmittels durch Destillation wurde der Rückstand aus Äthanol/Toluol umkristallisiert ; man erhielt trans-4-n-Propylcyclohexylmethyl-4'-(4"-brombiphenylyl)-keton, F. 150°.

Analog werden hergestellt :

trans-4-Ethylcyclohexylmethyl-4'-(4"-cyanobiphenylyl)-keton
trans-4-n-Butylcyclohexylmethyl-4'-(4"-cyanobiphenylyl)-keton
trans-4-n-Pentylcyclohexylmethyl-4'-(4"-cyanobiphenylyl)-keton
trans-4-n-Hexylcyclohexylmethyl-4'-(4"-cyanobiphenylyl)-keton
trans-4-n-Heptylcyclohexylmethyl-4-(4"-cyanobiphenylyl)-keton

## Beispiel 7

Ein Gemisch von 3,5 g trans-4-Propylcyclohexylessigsäurechlorid und 4,0 g 4-Pentylbiphenyl in 125 ml Dichlormethan wird portionsweise mit 2,6 g Aluminiumchlorid versetzt. Das Reaktionsgemisch wird bei Raumtemperatur 5 Stunden gerührt und dann auf 250 ml 2N Salzsäure gegossen. Die organische Phase wird abgetrennt und die wässrige Phase mit zweimal 150 ml Dichlormethan nachextrahiert. Die vereinigte organische Phase wird der Reihe nach mit Wasser, 1N Natronlauge und Wasser gewaschen, über Natriumsulfat getrocknet und eingedampft. Das Rohprodukt wird in siedendem Aceton gelöst und heiss mit etwas Aktivkohle filtriert. Beim Erkalten kristallisiert 4-(4'-Pentylphenyl)-α-(trans-4-propylcyclohexyl)-acetophenon aus. Ausbeute 4,3 g ; F. 100°, K. 143°.

Analog werden hergestellt :

4-(4'-Pentylphenyl)-α-(trans-4-ethylcyclohexyl)-acetophenon
4-(4'-Pentylphenyl)-α-(trans-4-butylcyclohexyl)-acetophenon
4-(4'-Pentylphenyl)-α-(trans-4-pentylcyclohexyl)-acetophenon
4-(4'-Pentylphenyl)-α-(trans-4-hexylcyclohexyl)-acetophenon
4-(4'-Pentylphenyl)-α-(trans-4-heptylcyclohexyl)-acetophenon

Die folgenden Verbindungen werden als weitere Beispiele für neue Verbindungen der Formel (II) genannt.

4-(4-trans-Pentylcyclohexyl)phenyl-butyl-keton
4-(4-trans-Propylcyclohexyl)phenyl-ethyl-keton
4-(4-trans-Propylcyclohexyl)phenyl-butyl-keton
4-(4-trans-Heptylcyclohexyl)phenyl-butyl-keton

4-(4-trans-(1-Oxopentyl)cyclohexyl)phenyl-ethyl-keton
4-(4-trans-(3-Oxopentyl)cyclohexyl)phenyl-ethyl-keton
4-(4-trans-(3-Chloropropyl)cyclohexyl)phenyl-ethyl-keton

4-trans-(4-Propylphenyl)cyclohexyl-butyl-keton
4-trans-(4-(3-Fluoropropyl)phenyl)cyclohexyl-butyl-keton
4-trans-(4-Butoxyphenyl)cyclohexyl-butyl-keton
4-trans-(4-Fluorophenyl)cyclohexyl-butyl-keton
4-trans-(4-Cyanophenyl)cyclohexyl-butyl-keton
4-(trans-(4-Butanoyloxyphenyl)cyclohexyl-butyl-keton

4-Propylphenyl-4-trans-pentylcyclohexylmethyl-keton
4-(1-Oxopropyl)phenyl-4-trans-pentylcyclohexylmethyl-keton
4-(1-Oxopropyl)phenyl-4-trans-(1-oxopentyl)cyclohexylmethyl-keton
4-(3-Fluoropropyl)phenyl-4-trans-pentylcyclohexylmethyl-keton
4-Butoxyphenyl-4-trans-(1-oxopentyl)cyclohexylmethyl-keton
4-Cyanophenyl-4-trans-(3-chloropropyl)cyclohexylmethyl-keton
4-Butanoyloxyphenyl-4-trans-(3-oxopentyl)cyclohexylmethyl-keton
4-Fluorophenyl-4-trans-(1-oxopentyl)cyclohexylmethyl-keton

4-trans-Pentylcyclohexyl-4-propylbenzyl-keton
4-trans-(3-Chloropropyl)cyclohexyl-4-(1-oxopropyl)benzyl-keton
4-trans-(1-Oxopentyl)cyclohexyl-4-(3-fluoropropyl)benzyl-keton
4-trans-(1-Oxopentyl)cyclohexyl-4-butanoyloxybenzyl-keton
4-trans-(3-Oxopentyl)cyclohexyl-4-butoxybenzyl-keton
4-trans-Pentylcyclohexyl-4-cyanobenzyl-keton
4-trans-(1-Oxopentyl)cyclohexyl-4-fluorobenzyl-keton
4-trans-(3-Chloropropyl)cyclohexyl-4-propylbenzyl-keton

4-Propylphenyl-4-trans-(1-oxopentyl)cyclohexan-carboxylat
4-(1-Oxopropyl)phenyl-4-trans-pentylcyclohexan-carboxylat
4-Butanoyloxyphenyl-4-trans-(3-oxopentyl)cyclohexan-carboxylat
4-(3-Fluoropropyl)phenyl-4-trans-(1-oxopentyl)cyclohexan-carboxylat
4-Butoxyphenyl-4-trans-(3-oxopentyl)cyclohexan-carboxylat
4-Fluorophenyl-4-trans-(1-oxopentyl)cyclohexan-carboxylat
4-Cyanophenyl-4-trans-(1-oxopentyl)cyclohexan-carboxylat
4-(1-Oxopropyl)phenyl-4-trans-(3-chloropropyl)cyclohexan-carboxylat

4-trans-(4-Propylphenoxymethyl)cyclohexyl-butyl-keton
4-trans-(4-Butanoyloxyphenoxymethyl)cyclohexyl-butyl-keton
4-trans-(4-(3-Fluoropropyl)phenoxymethyl)cyclohexyl-butyl-keton
2-(4-trans-(4-Butoxyphenoxymethyl)cyclohexyl)ethyl-ethyl-keton
2-(4-trans-(4-Fluorophenoxymethyl)cyclohexyl)ethyl-ethyl-keton
2-(4-trans-(4-Cyanophenoxymethyl)cyclohexyl)ethyl-ethyl-keton
4-(4-trans-Pentylcyclohexylmethoxy)phenyl-ethyl-keton
4-(4-trans-(3-Chloropropyl)cyclohexylmethoxy)phenyl-ethyl-keton

4-trans-(1-Fluoro-2-(4-propylphenyl)ethyl)cyclohexyl-butyl-keton
4-trans-(1-Chloro-2-(4-methoxyphenyl)ethyl)cyclohexyl-butyl-keton
2-(4-trans-(1-Cyano-2-(4-fluorophenyl)ethyl)cyclohexyl)ethyl-ethyl-keton
2-(4-trans-(1-Fluoro-2-(4-cyanophenyl)ethyl)cyclohexyl)ethyl-ethyl-keton
4-trans-(1-Cyano-2-(4-butanoyloxyphenyl)ethyl)cyclohexyl-butyl-keton
4-trans-(1-Chloro-2-(4-(3-fluoropropyl)phenyl)ethyl)cyclohexyl-butyl-keton
4-(2-(4-trans-Pentylcyclohexyl)-2-cyano)ethylphenyl-ethyl-keton
4-(2-(4-trans-(3-Chloropropyl)cyclohexyl)-2-chloro)ethyl-phenyl-ethyl-keton

4-trans-Propyl-trans-bicyclohexyl-butyl-keton
4-trans-Pentyl-trans-bicyclohexyl-butyl-keton
4-trans-Heptyl-trans-bicyclohexyl-ethyl-keton
4-trans-Heptyl-trans-bicyclohexyl-butyl-keton
4-trans-(3-Fluoropropyl)-trans-bicyclohexyl-ethyl-keton
4-trans-(3-Chloropropyl)-trans-bicyclohexyl-butyl-keton
4-trans-(1-Oxopropyl)-trans-bicyclohexyl-butyl-keton
4-trans-(3-Oxopentyl)-trans-bicyclohexyl-ethyl-keton
4-trans-Butanoyloxy-trans-bicyclohexyl-ethyl-keton

4-trans-Pentylcyclohexyl-(4-trans-propylcyclohexyl)methyl-keton
4-trans-(1-Oxopentyl)cyclohexyl-(4-trans-(1-oxopropyl)cyclohexyl)methyl-keton
4-trans-(3-Oxopentyl)cyclohexyl-(4-trans-(1-oxopropyl)cyclohexyl)methyl-keton

4-trans-(3-Chloropropyl)cyclohexyl-(4-trans-(1-oxopropyl)cyclohexyl)methyl-keton
4-trans-(1-Oxopentyl)cyclohexyl-(4-trans-(3-fluoropropyl)cyclohexyl)methyl-keton

4-trans-Propylcyclohexyl-4-trans-(1-oxopentyl)cyclohexan-carboxylat
4-trans-(1-Fluoropropyl)cyclohexyl-4-trans-(1-oxopentyl)cyclohexan-carboxylat
4-trans-(3-Fluoropropyl)cyclohexyl-4-trans-(3-oxopentyl)cyclohexan-carboxylat
4-trans-Propylcyclohexyl-4-trans-(1-oxopentyl)cyclohexan-carboxylat
4-trans-(1-Oxopropyl)cyclohexyl-4-trans-pentylcyclohexan-carboxylat
4-trans-(1-Oxopropyl)cyclohexyl-4-trans-(3-chloropropyl)cyclohexan-carboxylat

4-trans-(4-trans-Propylcyclohexyloxy)methylcyclohexyl-butyl-keton
2-(4-trans-(4-trans-Butanoyloxycyclohexyloxy)methylcyclohexyl)ethyl-ethyl-keton
2-(4-trans-(4-trans-Propylcyclohexyloxy)methylcyclohexyl)-ethyl-ethyl-keton
4-trans-(4-trans-(3-Fluoropropyl)cyclohexyloxy)methylcyclohexyl-butyl-keton
4-trans-(4-trans-Pentylcyclohexylmethoxy)cyclohexyl-ethyl-keton
4-trans-(4-trans-(3-Chloropropyl)cyclohexyl)methoxycyclohexyl-ethyl-keton

4-trans-(1-Fluoro-2-(4-trans-propylcyclohexyl)ethyl)cyclohexyl-butyl-keton
4-trans-(1-Chloro-2-(4-trans-butanoyloxycyclohexyl)ethyl)cyclohexyl-butyl-keton
2-(4-trans-(1-Cyano-2-(4-trans-butoxycyclohexyl)ethyl)cyclohexyl)ethyl-ethyl-keton
4-trans-(1-Cyano-2-(4-trans-(3-Fluoropropyl)cyclohexyl)ethyl)-cyclohexyl-butyl-keton
4-trans-(2-Fluoro-2-(4-trans-pentylcyclohexyl)ethyl)cyclohexyl-ethyl-keton
4-trans-(2-Cyano-2-(4-trans-(3-chloropropyl)cyclohexyl)ethyl)-cyclohexyl-ethyl-keton

4-(4-Pentyl-1-bicyclo(2,2,2)octyl)phenyl-ethyl-keton
4-Propylphenyl-(4-(3-chloropropyl)-1-bicyclo(2,2,2)octyl)methyl-keton
4-(1-Oxopentyl)-1-bicyclo(2,2,2)octyl-4-butanoyloxybenzyl-keton
4-(3-Fluoropropyl)phenyl-4-(3-oxopentyl)bicyclo(2,2,2)octan-1-carboxylat
4-(4-Cyanophenoxymethyl)-1-bicyclo(2,2,2)octyl-butyl-keton
4-(1-Fluoro-2-(4-methoxyphenyl)ethyl)-1-bicyclo(2,2,2)octyl-butyl-keton
4-(1-Chloro-2-(4-fluorophenyl)ethyl)-1-bicyclo(2,2,2)octyl-butyl-keton
4-(2-Cyano-2-(4-propyl-1-bicyclo(2,2,2)octyl)ethyl)phenyl-ethyl-keton

4-(4-trans-Propylcyclohexyl)-1-bicyclo(2,2,2)octyl-butyl-keton
4-trans-(3-Fluoropropyl)cyclohexyl-(4-pentyl-1-bicyclo(2,2,2)-octyl)methyl-keton
4-(3-Chloropropyl)-1-bicyclo(2,2,2)octyl-(4-trans-pentyl-cyclohexyl)methyl-keton
4-trans-Propylcyclohexyl-4-(3-oxopentyl)bicyclo(2,2,2)octan-1-carboxylat
4-trans-(4-Propyl-1-bicyclo(2,2,2)octyl)methoxycyclohexyl-ethyl-keton
4-(1-Fluoro-2-(4-trans-(1-oxopropyl)cyclohexyl)ethyl)-1-bicyclo(2,2,2)octyl-butyl-keton
4-(1-Chloro-2-(4-trans-pentylcyclohexyl)ethyl)-1-bicyclo(2,2,2)octyl-ethyl-keton
4-trans-(2-Cyano-2-(4-propyl-1-bicyclo(2,2,2)octyl)ethyl)cyclohexyl-butyl-keton

6-(4-trans-Pentylcyclohexyl)pyridazin-3-yl-ethyl-keton
6-Propylpyridazin-3-yl-(4-trans-(3-chloropropyl)cyclohexyl)-methyl-keton
4-trans-(3-Oxopentyl)cyclohexyl-(6-(3-fluoropropyl)pyridazin-3-yl)methyl-keton
6-Methoxypyridazin-3-yl-4-trans-(1-oxopentyl)cyclohexan-1-carboxylat
4-trans-(6-Butanoyloxypyridazin-3-yl-oxymethyl)cyclohexyl-butyl-keton
4-trans-(1-Fluoro-2-(6-pentylpyridazin-3-yl)ethyl)cyclohexyl-ethyl-keton
4-trans-(1-Chloro-2-(6-methoxypyridazin-3-yl)ethyl)cyclohexyl-methyl-keton
6-(2-Cyano-2-(4-trans-propylcyclohexyl)ethyl)pyridazin-3-yl-butyl-keton

5-(4-trans-Pentylcyclohexyl)pyrimidin-2-yl-ethyl-keton
5-Propylpyrimidin-2-yl-(4-trans-(3-chloropropyl)cyclohexyl)-methyl-keton
4-trans-(3-Oxopentyl)cyclohexyl-(5-(3-fluoropropyl)pyrimidin-2-yl)methyl-keton
5-Methoxypyrimidin-2-yl-4-trans-(1-oxopentyl)cyclohexan-1-carboxylat
4-trans-(5-Butanoyloxypyrimidin-2-yl-oxymethyl)cyclohexyl-butyl-keton
4-trans-(1-Fluoro-2-(5-pentylpyrimidin-2-yl)ethyl)cyclohexyl-ethyl-keton
4-trans-(1-Chloro-2-(5-methoxypyrimidin-2-yl)ethyl)cyclohexyl-methyl-keton
5-(2-Cyano-2-(4-trans-propylcyclohexyl)ethyl)pyrimidin-2-yl-butyl-keton

4-(4'-trans-Pentyl-4-trans-bicyclohexyl)phenyl-ethyl-keton
4-Propylphenyl-(4'-trans-(3-chloropropyl)-4-trans-bicyclohexyl)methyl-keton
4'-trans-(3-Oxopentyl)-4-trans-bicyclohexyl-(4-(3-fluoropropyl)phenyl)methyl-keton
4-Methoxyphenyl-4'-trans-(1-Oxopentyl)bicyclohexan-4-trans-carboxylat
4'-trans-(4-Butanoyloxyphenoxymethyl)-4-trans-bicyclohexyl-butyl-keton

4'-trans-(1-Fluoro-2-(4-fluorophenyl)ethyl)-4-trans-bicyclohexyl-ethyl-keton
4'-trans-(1-Chloro-2-(4-cyanophenyl)ethyl)-4-trans-bicyclohexyl-methyl-keton
4-(2-Cyano-2-(4'-trans-propyl-4-trans-bicyclohexyl)ethyl)phenyl-butyl-keton

4-(4-trans-Propylcyclohexyl)phenyl-(4-trans-pentylcyclohexyl)methyl-keton
4-(4-trans-Butanoyloxycyclohexyl)phenyl-(4-trans-(3-chloropropyl)cyclohexyl)methyl-keton
4-(4-trans-Butoxycyclohexyl)phenyl-(4-trans-(3-oxopentyl)cyclohexyl)methyl-keton
4-(4-trans-(3-Fluoropropyl)cyclohexyl)phenyl-(4-trans-(1-oxopentyl)cyclohexyl)methyl-keton
4-(4-trans-(1-Oxopropyl)cyclohexyl)phenyl-(4-trans-pentyl-cyclohexyl)methyl-keton
4-trans-Pentylcyclohexyl-(4-trans-propylcyclohexyl)benzyl-keton
4-trans-Propylcyclohexyl-4-(4-trans-pentylcycohexyl)benzyl-keton
4-trans-(3-Chloropropyl)cyclohexyl-4-(4-trans-butanoyloxy-cyclohexyl)benzyl-keton
4-trans-(1-Oxopentyl)cyclohexyl-4-(4-trans-(3-fluoropropyl)-cyclohexyl)benzyl-keton

trans-(4-Propylphenyl)cyclohexyl-(4-trans-(3-chloropropyl)cyclohexyl)methy-keton
4-trans-(3-Oxopentyl)cyclohexyl-(4-trans-(4-(3-fluoropropyl)-phenylcyclohexyl)methyl-keton
4-trans-(4-Methoxyphenyl)cyclohexyl-4-trans-(1-oxopentyl)cyclohexan-1-carboxylat
trans-(4-trans-(4-Butanoyloxyphenyl)cyclohexyloxymethyl)cyclohexyl-butyl-keton
4-trans-(1-Fluoro-2-(4-trans-(4-fluorophenyl)cyclohexyl)ethyl)-cyclohexyl-ethyl-keton
4-trans-(1-Chloro-2-(4-trans-(4-cyanophenyl)cyclohexyl)ethyl)-cyclohexyl-methyl-keton
4-(4-trans-(2-Cyano-2-(4-trans-propylcyclohexyl)ethyl)cyclohexyl)phenyl-butyl-keton

4'-trans-Pentyl-4-trans-p-tercyclohexyl-ethyl-keton
4-trans-Propylcyclohexyl-(4'-trans-(3-chloropropyl)-4-trans-bicyclohexyl)methyl-keton
4'-trans-(3-Oxopentyl)-4-trans-bicyclohexyl-(4-trans(3-fluoropropyl)cyclohexyl)methyl-keton
4-trans-Propylcyclohexyl-4'-trans-(1-oxopentyl)bicyclohexan-4-trans-carboxylat
4'-trans-(4-trans-Butanoyloxycyclohexyloxymethyl)-4-trans-bicyclohexyl-butyl-keton
4'-trans-(1-Fluoro-2-(4-trans-pentylcyclohexyl)ethyl)-4-trans-bicyclohexyl-ethyl-keton
4'-trans-(1-Chloro-2-(4-trans-methoxycyclohexyl)ethyl)-4-trans-bicyclohexyl-methyl-keton
4-trans-(2-Cyano-2-(4'-trans-propyl-4-trans-bicyclohexyl)ethyl)-cyclohexyl-butyl-keton

4'-trans-(4-Pentyl-1-bicyclo(2,2,2)octyl)-4-trans-bicyclohexyl-ethyl-keton
4'-trans-Propyl-4-trans-bicyclohexyl-(4-(3-chloropropyl)-1-bicyclo(2,2,2)octylmethyl-keton
4-(3-Oxopentyl)-1-bicyclo(2,2,2)octyl-(4'-trans-(3-fluoropropyl)-4-trans-bicyclohexyl)methyl-keton
4'-trans-Propyl-4-trans-bicyclohexyl-4-(1-oxopentyl)bicyclo-(2,2,2)octan-1-carboxylat
4-(4'-trans-Butanoyloxy-4-trans-bicyclohexyloxymethyl)-1-bicyclo(2,2,2)octyl-butyl-keton
4-(1-Fluoro-2-(4'-trans-pentyl-4-trans-bicyclohexyl)ethyl)-1-bicyclo(2,2,2)octyl-ethyl-keton
4-(1-Chloro-2-(4'-trans-methoxy-4-trans-bicyclohexyl)ethyl)-1-bicyclo(2,2,2)octyl-methyl-keton
4'-trans-(2-Cyano-2-(4-propyl-1-bicyclo(2,2,2)octyl)ethyl)-4-trans-bicyclohexyl-butyl-keton

4-trans-(4-(3-Oxopentyl)-1-bicyclo(2,2,2)octyl)cyclohexyl-(4-trans-(3-fluoropropyl)cyclohexyl)methyl-keton
4-trans-Propylcyclohexyl-(4-trans-(4-(3-chloropropyl)-1-bicyclo(2,2,2)octyl)cyclohexyl)methyl-keton
4-trans-Propylcyclohexyl-(4-trans-(4-(1-oxopentyl)-1-bicyclo(2,2,2)octyl)cyclohexan-1-carboxylat
4-trans-(4-(4-trans-Butanoyloxycyclohexyloxymethyl)cyclohexyl)-1-bicyclo(2,2,2)octyl-butyl-keton
4-(4-trans-(1-Fluoro-2-(4-trans-pentylcyclohexyl)ethyl)cyclohexyl)-1-bicyclo(2,2,2)octyl-ethyl-keton
4-(4-trans-(1-Chloro-2-(4-trans-methoxycyclohexyl)ethyl)cyclohexyl)-1-bicyclo(2,2,2)octyl-methyl-keton
4-trans-(2-Cyano-2-(4-trans-(4-propyl-1-bicyclo(2,2,2)octyl)-cyclohexyl)ethyl)cyclohexyl-butyl-keton

6-(4'-trans-Pentyl-4-trans-bicyclohexyl)pyridazin-3-yl-ethyl-keton
6-Propylpyridazin-3-yl-(4'-trans-(3-chloropropyl)-4-trans-bicyclohexyl)methyl-keton
4'-trans-(3-Oxopentyl)-4-trans-bicyclohexyl-(6-(3-fluoropropyl)pyridazin-3-yl)methyl-keton
6-Methoxypyridazin-3-yl-4'-trans-(1-oxopentyl)-bicyclohexan-4-trans-carboxylat
4'-trans-(6-Butanoyloxypyridazin-3-yl-oxymethyl)-4-trans-bicyclohexyl-butyl-keton
4'-trans-(1-Fluoro-2-(6-pentylpyridazin-3-yl)ethyl)-4-trans-bicyclohexyl-ethyl-keton
4'-trans-(1-Chloro-2-(6-methoxypyridazin-3-yl)ethyl)-4-trans-bicyclohexyl-methyl-keton
6-(2-Cyano-2-(4'-trans-propyl-4-trans-bicyclohexyl)ethyl)pyridazin-3-yl-butyl-keton

4-trans-(6-Propylpyridazin-3-yl)cyclohexyl-(4-trans-(3-chloropropyl)cyclohexyl)methyl-keton
4-trans-(3-Oxopentyl)cyclohexyl-(4-trans-(6-(3-fluoropropyl)pyridazin-3-yl)cyclohexyl)methyl-keton
4-trans-(6-Methoxypyridazin-3-yl)cyclohexyl-4-trans-(1-oxopentyl)cyclohexan-1-carboxylat
4-trans-(4-trans-(6-Butanoyloxypyridazin-3-yl)cyclohexyloxy-methyl)cyclohexyl-butyl-keton
4-trans-(1-Fluoro-2-(4-trans-(6-pentylpyridazin-3-yl)cyclohexyl)ethyl)cyclohexyl-ethyl-keton
4-trans-(1-Chloro-2-(4-trans-(6-methoxypyridazin-3-yl)cyclohexyl)ethyl)cyclohexyl-methyl-keton

6-(4-trans-(2-Cyano-2-(4-trans-propylcyclohexyl)ethyl)cyclohexyl)pyridazin-3-yl-butyl-keton

4-(6-(4-trans-Pentylcyclohexyl)pyridazin-3-yl)phenyl-ethyl-keton
4-Propylphenyl-(6-(4-trans-(3-chloropropyl)cyclohexyl)pyridazin-3-yl)methyl-keton
6-(4-trans-(3-Oxopentyl)cyclohexyl)pyridazin-3-yl-(4-(3-fluoropropyl)phenyl)methyl-keton
4-Methoxyphenyl-6-(4-trans-(1-oxopentyl)cyclohexyl)pyridazin-3-carboxylat
4-trans-(6-(4-Butanoyloxyphenoxymethyl)pyridazin-3-yl)cyclohexyl-butyl-keton
4-trans-(6-(1-Fluoro-2-(4-fluorophenyl)ethyl)pyridazin-3-yl)-cyclohexyl-ethyl-keton
4-trans-(6-(1-Chloro-2-(4-cyanophenyl)ethyl)pyridazin-3-yl)-cyclohexyl-methyl-keton
4-(2-Cyano-2-(6-(4-trans-propylcyclohexyl)pyridazin-3-yl)-ethyl)phenyl-butyl-keton

6-(4-Propylphenyl)pyridazin-3-yl-(4-trans-(3-chloropropyl)-cyclohexyl)methyl-keton
4-trans-(3-Oxopentyl)cyclohexyl-(6-(4-(3-fluoropropyl)phennyl)pyridazin-3-yl)methyl-keton
6-(4-Methoxyphenyl)pyridazin-3-yl-4-trans-(1-oxopentyl)cyclohexan-1-carboxylat
4-trans-(6-(4-Butanoyloxyphenyl)pyridazin-3-yloxymethyl)cyclohexyl-butyl-keton
4-trans-(1-Fluoro-2-(6-(4-fluorophenyl)pyridazin-3-yl)ethyl)-cyclohexyl-ethyl-keton
4-trans-(1-Chloro-2-(6-(4-cyanophenyl)pyridazin-3-yl)ethyl)-cyclohexyl-methyl-keton
4-(6-(2-Cyano-2-(4-trans-propylcyclohexyl)ethyl)pyridazin-3-yl)phenyl-butyl-keton

5-(4'-trans-Pentyl-4-trans-bicyclohexyl)pyrimidin-2-yl-ethyl-keton
2-Propylpyrimidin-5-yl-(4'-trans-(3-chloropropyl)-4-trans-bicyclohexyl)methyl-keton
4'-trans-(3-Oxopentyl)-4-trans-bicyclohexyl-(2-(3-fluoropropyl)pyrimidin-5-yl)methyl-keton
2-Methoxypyrimidin-5-yl-4'-trans-(1-oxopentyl)bicylclohexan-4-trans-carboxylat
4'-trans-(2-Butanoyloxypyrimidin-5-yl-oxymethyl)-4-trans-bicyclohexyl-butyl-keton
4'-trans-(1-Fluoro-2-(2-methoxypyrimidin-5-yl)ethyl)-4-trans-bicyclohexyl-ethyl-keton
4'-trans-(1-Chloro-2-(2-pentylpyrimidin-5-yl)ethyl)-4-trans-bicyclohexyl-methyl-keton
5-(2-Cyano-2-(4'-trans-propyl-4-trans-bicyclohexyl)ethyl)pyrimidin-2-yl-butyl-keton

4-trans-(2-Propylpyrimidin-5-yl)cyclohexyl-(4-trans-(3-chloropropyl)cyclohexyl)methyl-keton
4-trans-(3-Oxopentyl)cyclohexyl-(4-trans-(2-(3-fluoropropyl)-pyrimidin-5-yl)cyclohexyl)methyl-keton
4-trans-(2-Methoxypyrimidin-5-yl)cyclohexyl-4-trans-(1-oxopentyl)cyclohexan-1-carboxylat
4-trans-(4-trans-(2-Butanoyloxypyrimidin-5-yl)cyclohexyloxy-methyl)cyclohexyl-butyl-keton
4-trans-(1-Fluoro-2-(4-trans-(2-pentylpyrimidin-5-yl)cyclohexyl)ethyl)cyclohexyl-ethyl-keton
4-trans-(1-Chloro-2-(4-trans-(2-methoxypyrimidin-5-yl)cyclohexyl)ethyl)cyclohexyl-methyl-keton
5-(4-trans-(2-Cyano-2-(4-trans-propylcyclohexyl)ethyl)cyclohexyl)pyrimidin-2-yl-butyl-keton

4-(5-(4-trans-Pentylcyclohexyl)pyrimidin-2-yl)phenyl-ethyl-keton
4-Propylphenyl-(5-(4-trans-(3-chloropropyl)cyclohexyl)pyrimidin-2-yl)methyl-keton
5-(4-trans-(3-Oxopentyl)cyclohexyl)pyrimidin-2-yl-(4-(3-fluoropropyl)phenyl)methyl-keton
3-Methoxyphenyl-5-(4-trans-(1-oxopentyl)cyclohexyl)pyrimidin-2-carboxylat
4-trans-(2-(4-Butanoyloxyphenoxymethyl)pyrimidin-5-yl)cyclohexyl-butyl-keton
4-trans-(2-(1-Fluoro-2-(4-fluorophenyl)ethyl)pyrimidin-5-yl)-cyclohexyl-ethyl-keton
4-trans-(2-(1-Chloro-2-(4-cyanophenyl)ethyl)pyrimidin-5-yl)cyclohexyl-methyl-keton
4-(2-Cyano-2-(5-(4-trans-propylcyclohexyl)pyrimidin-5-yl)ethyl)-phenyl-butyl-keton

2-(4-Propylphenyl)pyrimidin-5-yl-(4-trans-(3-chloropropyl)cyclohexyl)methyl-keton
4-trans-(3-Oxopentyl)cyclohexyl-(2-(4-(3-fluoropropyl)phenyl)-pyrimidin-5-yl)methyl-keton
2-(4-Methoxyphenyl)pyrimidin-5-yl-4-trans-(1-oxopentyl)cyclohexan-1-carboxylat
4-trans-(2-(4-Butanoyloxyphenyl)pyrimidin-5-yloxymethyl)cyclohexyl-butyl-keton
4-trans-(1-Fluoro-2-(2-(4-fluorophenyl)pyrimidin-5-yl)ethyl)-cyclohexyl-ethyl-keton
4-trans-(1-Chloro-2-(2-(4-cyanophenyl)pyrimidin-5-yl)ethyl)-cyclohexyl-methyl-keton
4-(5-(2-Cyano-2-(4-trans-propylcyclohexyl)ethyl)pyrimidin-2-yl)phenyl-butyl-keton

4'-(4'-trans-Pentyl-4-trans-bicyclohexyl)biphenyl-4-yl-ethyl-keton
4'-Propyl-biphenyl-4-yl-(4'-trans-(3-chloropropyl)-4-trans-bicyclohexyl)methyl-keton
4'-trans-(3-Oxopentyl)-4-trans-bicyclohexyl-(4'-(3-fluoropropyl)biphenyl-4-yl)methyl-keton
4'-Methoxybiphenyl-4-yl-4'-trans-(1-oxopentyl)bicyclohexan-4-trans-carboxylat
4'-trans-(4'-Butanoyloxybiphenyl-4-yloxymethyl)-4-trans-bicyclohexyl-butyl-keton
4'-trans-(1-Fluoro-2-(4'-fluorobiphenyl-4-yl)ethyl)-4-trans-bicyclohexyl-ethyl-keton
4'-trans-(1-Chloro-2-(4'-cyanobiphenyl-4-yl)ethyl)-4-trans-bicyclohexyl-methyl-keton
4'-trans-(2-Cyano-2-(4'-trans-propyl-4-trans-bicyclohexyl)-ethyl)biphenyl-4-yl-butyl-keton

4-Propylphenyl-(4-(4'-trans-(3-chloropropyl)-4-trans-bicyclohexyl)phenyl)methyl-keton
4-(4'-trans-(3-Oxopentyl)-4-trans-bicyclohexyl)phenyl-(4-(3-fluoropropyl)phenyl)methyl-keton
4-Methoxyphenyl-4-(4'-trans-(1-oxopentyl)-4-trans-bicyclohexyl)benzoat

4'-trans-(4-(4-Butanoyloxyphenoxymethyl)phenyl)-4-trans-bicyclohexyl-butyl-keton
4'-trans-(4-(1-Fluoro-2-(4-fluorophenyl)ethyl)phenyl)-4-trans-bicyclohexyl-ethyl-keton
4'-trans-(4-(1-Chloro-2-(4-cyanophenyl)ethyl)phenyl)-4-trans-bicyclohexyl-methyl-keton
4-(2-Cyano-2-(4-(4'-trans-propyl-4-trans-bicyclohexyl)phenyl)ethyl)phenyl-butyl-keton

4-trans-(4'-Propylbiphenyl-4-yl)cyclohexyl-(4-trans-(3-chloropropyl)cyclohexyl)methyl-keton
4-trans-(3-Oxopentyl)cyclohexyl-(4-trans-(4'-(3-fluoropropyl)biphenyl-4-yl)cyclohexyl)methyl-keton
4-trans-(4'-Methoxybiphenyl-4-yl)cyclohexyl-4-trans-(1-oxopentyl)cyclohexan-1-carboxylat
4-trans-(4-trans-(4'-Butanoyloxybiphenyl-4-yl)cyclohexyloxymethyl)cyclohexyl-butyl-keton
4-trans-(1-Fluoro-2-(4-trans-(4'-fluorobiphenyl-4-yl)cyclohexyl)ethyl)cyclohexyl-ethyl-keton
4-trans-(1-Chloro-2-(4-trans-(4'-cyanobiphenyl-4-yl)cyclohexyl)ethyl)cyclohexyl-methyl-keton
4'-(4-trans-(2-Cyano-2-(4-trans-propylcyclohexyl)ethyl)cyclohexyl)biphenyl-4-yl-butyl-keton

4'-Propylbiphenyl-4-yl-(4-trans-(3-chloropropyl)cyclohexyl)-methyl-keton
4-trans-(3-Oxopentyl)cyclohexyl-(4'-(3-fluoropropyl)biphenyl-4-yl)methyl-keton
4'-Ethoxybiphenyl-4-yl-4-trans-(1-oxopentyl)bicyclohexan-1-carboxylat
4-trans-(4'-Butanoyloxybiphenyl-4-yloxymethyl)cyclohexyl-butyl-keton
4-trans-(1-Fluoro-2-(4'-fluorobiphenyl-4-yl)ethyl)cyclohexyl-ethyl-keton
4-trans-(1-Chloro-2-(4'-cyanobiphenyl-4-yl)ethyl)cyclohexyl-methyl-keton
4'-(2-Cyano-2-(4-trans-propylcyclohexyl)ethyl)biphenyl-4-yl-butyl-keton

4-Propylphenyl-(4-(4-trans-(3-chloropropyl)cyclohexyl)phenyl)methyl-keton
4-(4-trans-(3-Oxopentyl)cyclohexyl)phenyl-(4-(3-fluoropropyl)phenyl)methyl-keton
4-Ethoxyphenyl-4-(4-trans-(1-oxopentyl)cyclohexyl)benzoat
4-trans-(4-(4-Butanoyloxyphenoxymethyl)phenyl)cyclohexyl-butyl-keton
4-trans-(4-(1-Fluoro-2-(4-fluorophenyl)ethyl)phenyl)cyclohexyl-ethyl-keton
4-trans-(4-(1-Chloro-2-(4-cyanophenyl)ethyl)phenyl)cyclohexyl-methyl-keton
4-(2-Cyano-2-(4-(4-trans-propylcyclohexyl)phenyl)ethyl)phenyl-butyl-keton

Die folgenden Beispiele betreffen erfindungsgemäße FK-Mischungen :

## Beispiel A

Eine FK-Mischung bestehend aus

25 % r-1-Cyan-cis-4-(trans-4-butylcyclohexyl)-1-heptylcyclohexan
21 % r-1-Cyan-cis-4-(trans-4-pentylcyclohexyl)-1-pentylcyclohexan
9 % p-trans-4-Propylcyclohexylbenzoesäure-(p-propylphenylester)
8 % p-trans-4-Pentylcyclohexylbenzoesäure-(p-propylphenylester)
6 % 4,4'-Bis-(trans-4-propylcyclohexyl)-2-fluor-biphenyl
6 % 4,4'-Bis-(trans-4-pentylcyclohexyl)-2-fluor-biphenyl
13 % trans-1-p-Methoxyphenyl-4-propylcyclohexan
11 % trans-1-p-Ethoxyphenyl-4-proylcyclohexan und
1 % 4-trans-(p-Propylphenyl)-cyclohexyl-butyl-keton

hat einen Klp. von 81°. Diese Mischung ist besonders gut geeignet für HN-Displays, die auf dem DAP-Effekt beruhen.

## Beispiel B

Man stellt eine FK-Mischung her bestehend aus

25 % r-1-Cyan-cis-4-(trans-4-butylcyclohexyl)-1-heptylcyclohexan
21 % r-1-Cyan-cis-4-(trans-4-pentylcyclohexyl)-1-pentylcyclohexan
9 % p-trans-4-Propylcyclohexylbenzoesäure-(p-propylphenylester)
8 % p-trans-4-Pentylcyclohexylbenzoesäure-(p-propylphenylester)
6 % 4,4'-Bis-(trans-4-propylcyclohexyl)-2-fluor-biphenyl
6 % 4,4'-Bis-(trans-4-pentylcyclohexyl)-2-fluor-biphenyl
9 % trans-1-p-Methoxyphenyl-4-propylcyclohexan
6 % trans-1-p-Ethoxyphenyl-4-propylcyclohexan und
10 % 4-(4-trans-Hexanoylcyclohexyl)-phenyl-ethyl-keton.

Diese Mischung ist besonders gut geeignet für HN-Displays, die auf dem DAP-Effekt beruhen.

Beispiel C

Man stellt eine FK-Mischung her bestehend aus

25 % r-1-Cyan-cis-4-(trans-4-butylcyclohexyl)-1-heptylcyclohexan
21 % r-1-Cyan-cis-4-(trans-4-pentylcyclohexyl)-1-pentylcyclohexan
17 % p-trans-4-Propylcyclohexylbenzoesäure-(4-butyl-2-cyanphenylester)
6 % 4,4'-Bis-(trans-4-propylcyclohexyl)-2-fluor-biphenyl
6 % 4,4'-Bis-(trans-4-pentylcyclohexyl)-2-fluor-biphenyl
7 % trans-1-p-Methoxyphenyl-4-propylcyclohexan
6 % trans-1-p-Ethoxyphenyl-4-propylcyclohexan
7 % 4-(4-trans-Hexanoylcyclohexyl)-phenyl-ethyl-keton und
5 % 4-trans-(p-Propylphenyl)-cyclohexyl-butyl-keton.

Diese Mischung ist besonders gut geeignet für HN-Displays, die auf dem DAP-Effekt beruhen.

Beispiel D

Man stellt eine FK-Mischung her bestehend aus

34,0 % r-1-Cyan-cis-4-(trans-4-butylcyclohexyl)-1-heptylcyclohexan
29,1 % r-1-Cyan-cis-4-(trans-4-pentylcyclohexyl)-1-pentylcyclohexan
4,8 % trans,trans-4-Propylcyclohexylcyclohexan-4'-carbonsäure-trans-4-propylcyclohexylester
3,9 % trans,trans-4-Propylcyclohexylcyclohexan-4'-carbonsäure-trans-4-pentylcyclohexylester
3,9 % trans,trans-4-Butylcyclohexylcyclohexan-4'-carbonsäure-trans-4-propylcyclohexylester
3,9 % trans,trans-4-Butylcyclohexylcyclohexan-4'-carbonsäure-trans-4-pentylcyclohexylester
10,4 % trans-trans-4-Methoxy-4'-propyl-cyclohexylcyclohexan und
10,0 % 4-trans-Pentyl-trans-bicyclohexyl-ethyl-keton.

Diese Mischung ist besonders gut geeignet für Guest-Host-Displays mit positivem Kontrast.

Beispiel E

Man stellt eine FK-Mischung her bestehend aus

34,0 % r-1-Cyan-cis-4-(trans-4-butylcyclohexyl)-1-heptylcyclohexan
29,1 % r-1-Cyan-cis-4-(trans-4-pentylcyclohexyl)-1-pentylcyclohexan
4,8 % trans,trans-4-Propylcyclohexylcyclohexan-4'-carbonsäure-trans-4-propylcyclohexylester
3,9 % trans,trans-4-Propylcyclohexylcyclohexan-4'-carbonsäure-trans-4-pentylcyclohexylester
3,9 % trans,trans-4-Butylcyclohexylcyclohexan-4'-carbonsäure-trans-4-propylcyclohexylester
3,9 % trans,trans-4-Butylcyclohexylcyclohexan-4'-carbonsäure-trans-4-pentylcyclohexylester
10,4 % trans-trans-4-Methoxy-4'-propyl-cyclohexylcyclohexan und
10,0 % 4-trans-Pentyl-trans-bicyclohexyl-ethyl-keton.
7,0 % 4-trans-Pentyl-trans-bicyclohexyl-ethyl-keton und
3,0 % 4-trans-Pentanoyl-trans-bicyclohexyl-ethyl-keton.

Diese Mischung ist besonders gut geeignet für Guest-Host Displays mit positivem Kontrast.

Beispiel F

Man stellt eine FK-Mischung her bestehend aus

15 % p-trans-4-Propylcyclohexyl-benzonitril
30 % 4-(4-trans-Heptylcyclohexyl)phenyl-ethyl-keton
14 % trans-4-Propylcyclohexancarbonsäure-(trans-4-propylcyclohexylester)

4 % 4,4'-Bis-(trans-4-propylcyclohexyl)-biphenyl
6 % 4-(trans-4-Pentylcyclohexyl)-4'-(trans-4-propylcyclohexyl)-biphenyl
8 % p-trans-4-Propylcyclohexylbenzoesäure-(p-propylphenylester)
6 % p-trans-4-Pentylcyclohexylbenzoesäure-(p-propylphenylester
9 % 4-Ethyl-4'(trans-4-propylcyclohexyl)-biphenyl und
8 % 4-Ethyl-4'(trans-4-pentylcyclohexyl)-biphenyl

Diese Mischung weist günstige Viskositätswerte bei tiefen Temperaturen auf.

## Beispiel G

Man stellt eine FK-Mischung her bestehend aus

15 % p-trans-4-Propylcyclohexyl-benzonitril
30 % 4-(4-trans-Heptylcyclohexyl)phenyl-ethyl-keton
14 % trans-4-Propylcyclohexancarbonsäure-(trans-4-propylcyclohexylester)
4 % 4,4'-Bis-(trans-4-propylcyclohexyl)-biphenyl
6 % 4-(trans-4-Pentylcyclohexyl)-4'-(trans-4-propylcyclohexyl)-biphenyl
8 % p-trans-4-Propylcyclohexylbenzoesäure-(p-propylphenylester)
6 % p-trans-4-Pentylcyclohexylbenzoesäure-(p-propylphenylester
9 % 4'-(4-trans-Pentylcyclohexyl)-biphenyl-4-yl-ethyl-keton und
8 % 4'-(4-trans-Pentylcyclohexyl)-biphenyl-4-yl-butyl-keton.

Diese Mischung weist günstige Viskositätswerte bei tiefen Temperaturen auf.

**Patentansprüche**

1. Flüssigkristallmischung für elektrooptische Anzeigen mit mindestens zwei flüssigkristallinen Komponenten, dadurch gekennzeichnet, daß sie mindestens eine Ketonverbindung, enthaltend den querpolarisierenden strukturellen Bestandteil $—CH_2—CO—$, enthält, wobei α- und β-Diketonstrukturen ausgeschlossen sind.

2. Flüssigkristallmischung nach Anspruch 1, dadurch gekennzeichnet, daß die Mischung als querpolarisierte Verbindung mindestens eine anisotrope Ketonverbindung der Formel (1) enthält

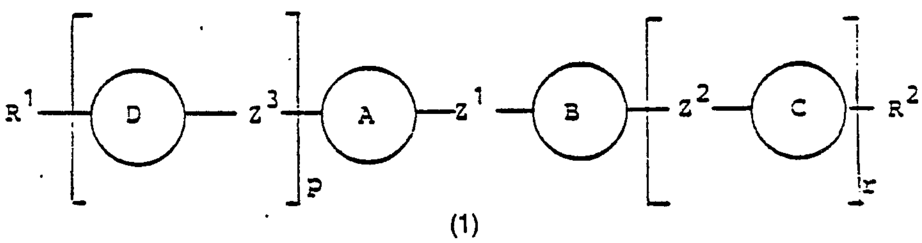

(1)

in welcher p und r gleich oder verschieden und Null oder Eins darstellen, die Ringe A, B, C, D, gewählt sind aus cycloaliphatischen Resten der Formeln (1a), (1b)

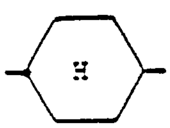

(la)

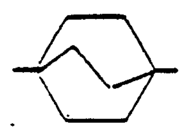

(lb)

und aromatischen Resten der Formeln (1c), (1d), (1e)

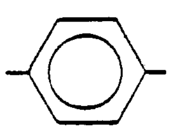

(lc)

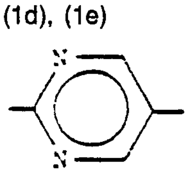

(ld)

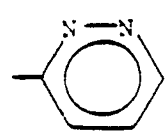

(le)

$Z^1$, $Z^2$, $Z^3$ Kovalenzbindungen oder Gruppen der Formeln

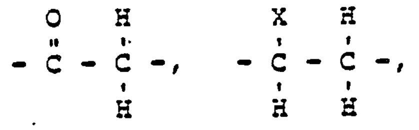 $-CH_2O-$ oder $-C(O)O-$

oder deren Umkehrung darstellen, worin X Wasserstoff oder den Rest $X^1$ bedeutet, der ein Fluor- oder Chloratom oder die Cyanogruppe darstellt, und $R^1$, $R^2$ gleich oder verschieden sind und Wasserstoff, Fluor, Chlor, Cyano oder Alkyl-, Alkoxy-, Alkoxycarbonyl- oder Alkylcarbonyloxygruppen sind, deren Alkylteil 1-12 C-Atome in gerader oder verzweigter und gegebenenfalls chiraler Kette enthält, die gegebenenfalls durch ein oder zwei Substituenten gewählt aus Fluor, Chlor oder Cyano substituiert ist oder/und 1 bis 2 Ketocarbonylgruppen enthält, wobei zwei Carbonylgruppen stets durch mindestens zwei C-Atome der Kette des Alkylteils voneinander getrennt sind und jedes C-Atom der Kette des Alkylteils höchstens einen Substituenten trägt, mit den Massgaben, dass

a) das Molekül der Formel (1) insgesamt mindestens eine Ketocarbonylgruppe enthält,

b) an keinen im Molekül der Formel (1) enthaltenen cycloaliphatischen Rest der Formeln (1a) oder/und (1b) gleichzeitig direkt Sauerstoff einerseits und direkt Sauerstoff oder der Rest $X^1$ andererseits gebunden ist,

c) an keinen im Molekül der Formel (1) enthaltenen aromatischen Rest der Formeln (1c), (1d) oder (1e) eine Gruppe der Formeln $—CH_2O—$ oder $—CH(X^1)—$ direkt mit dem C-Atom dieser Gruppen gebunden ist, ausser wenn $X^1$ Fluor bedeutet, und

d) das Molekül der Formel (1) mindestens einen cycloaliphatischen Rest der Formeln (1a) oder/und (1b) enthält.

3. Mischung nach Anspruch 2, dadurch gekennzeichnet, daß in der Formel (1) die Gruppe $R^1$ oder/und $R^2$ eine solche der Formel (2)

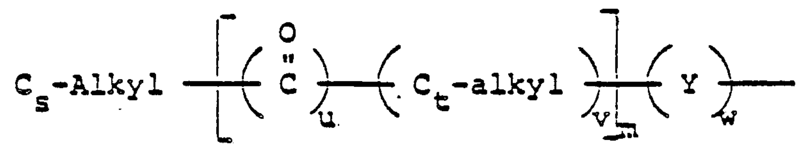 (2)

ist, in der die Indizes u, v, w gleich oder verschieden und Null oder Eins sind, m Eins oder Zwei ist, Y die Ketocarbonylgruppe (—C(O)—), die Oxycarbonylgruppe (—OC(O)—), oder die Carbonyloxygruppe (—C(O)O—) bedeutet und die Indizes s und t Zahlen von 1-12 mit den Massgaben bedeuten, dass die Formel (2) insgesamt höchstens 12 C-Atome enthält und dass wenn $w = 1 = u$, dann $v = 1$ und $t \geq 2$.

4. Mischung nach Anspruch 2 oder 3, dadurch gekennzeichnet, daß die Ketoverbindung der Formel (1) insgesamt höchstens zwei Ketocarbonyle und insgesamt höchstens zwei Reste $X^1$ enthält.

5. Mischung nach Anspruch 3 oder 4, dadurch gekennzeichnet, daß in der Formel (2) entweder w Null bedeutet und dann $m = v = u = 1$ sowie $t \leq 2$, oder daß w Eins bedeutet und dann Y Ketocarbonyl darstellt und $u = v =$ Null.

6. Mischung nach einem der Ansprüche 2-5, dadurch gekennzeichnet, daß $R^1$ oder/und $R^2$ einen Substituenten $X^1$ enthält und dieser durch höchstens zwei Kettenatome vom benachbarten Ring getrennt ist.

7. Mischung nach einem der Ansprüche 2-6, dadurch gekennzeichnet, daß höchstens eines von $R^1$, $R^2$ Wasserstoff oder $X^1$ bedeutet.

8. Mischung nach einem der Ansprüche 3-6, dadurch gekennzeichnet, daß eines von $R^1$, $R^2$ der in Anspruch 3 angegebenen Formel (2) entspricht und das andere von $R^2$, $R^1$ eine $C_{1-12}$-Alkylkette bedeutet.

9. Mischung nach einem der Ansprüche 3-6, dadurch gekennzeichnet, daß beide $R^1$, $R^2$ der in Anspruch 3 angegebenen Formel (2) entsprechen.

10. Mischung nach einem der Ansprüche 2-6 oder 8-9, dadurch gekennzeichnet, daß $R^1$ und $R^2$ unterschiedliche Kettenlängen haben.

11. Mischung nach einem der Ansprüche 2-10, dadurch gekennzeichnet, daß p oder/und r Null ist.

12. Neue anisotrope Ketonverbindungen, gekennzeichnet durch die Formel (11)

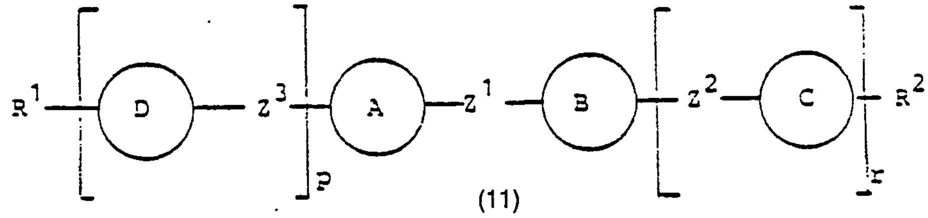

(11)

in welcher p und r gleich oder verschieden und Null oder Eins darstellen, die Ringe A, B, C, D gewählt sind aus cycloaliphatischen Resten der Formeln (1a), (1b)

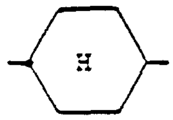

(Ia)

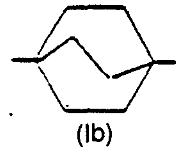

(Ib)

und aromatischen Resten der Formeln (1c), (1d), (1e)

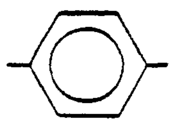

(Ic)

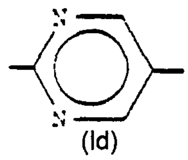

(Id)

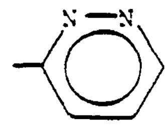

(Ie)

$Z^1$, $Z^2$ und $Z^3$ Kovalenzbindungen oder Gruppen der Formeln

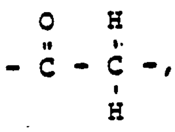,

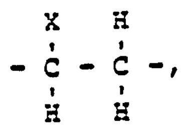,

$-CH_2O-$ oder $-C(O)O-$

oder deren Umkehrung darstellen, worin X Wasserstoff oder den Rest $X^1$ bedeutet, der ein Fluor- oder Chloratom oder die Cyanogruppe darstellt, und $R^1$, $R^2$ gleich oder verschieden sind und Wasserstoff, Fluor, Chlor, Cyano oder Alkyl-, Alkoxy-, Alkoxycarbonyl- oder Alkylcarbonyloxygruppen sind, deren Alkylteil 1-12 C-Atome in gerader oder verzweigter und gegebenenfalls chiraler Kette enthält, die gegebenenfalls durch ein oder zwei Substituenten gewählt aus Fluor, Chlor oder Cyano substituiert ist oder/und 1 bis 2 Ketocarbonylgruppen enthält, wobei zwei Carbonylgruppen stets durch mindestens zwei C-Atome der Kette des Alkylteils voneinander getrennt sind und jedes C-Atom der Kette des Alkylteils höchstens einen Substituenten trägt, mit den Massgaben, dass

a) das Molekül der Formel (11) insgesamt mindestens eine Ketocarbonylgruppe enthält,

b) an keinen im Molekül der Formel (11) enthaltenen cycloaliphatischen Rest der Formeln (1a) oder/und (1b) gleichzeitig direkt Sauerstoff einerseits und direkt Sauerstoff oder der Rest $X^1$ andererseits gebunden ist,

c) an keinen im Molekül der Formel (11) enthaltenen aromatischen Rest der Formeln (1c), (1d) oder (1e) eine Gruppe der Formeln $—CH_2O—$ oder $—CH(X^1)—$ direkt mit dem C-Atom dieser Gruppen gebunden ist, ausser wenn $X^1$ Fluor bedeutet,

d) das Molekül der Formel (11) mindestens einen cycloaliphatischen Rest der Formeln (1a) oder/und (1b) enthält und

e) $Z^1$, $Z^2$ und $Z^3$ nicht gleichzeitig Kovalenzbindungen sind, wenn p oder r gleich Null ist, das Molekül zwei Reste der Formel (1c) und einem Rest der Formel (1a) enthält und $R^1$, $R^2$ gewählt sind aus $C_{1-11}$-Alkyl—C(O)— und $C_{1-12}$-Alkyl.

13. Verbindung nach Anspruch 12, dadurch gekennzeichnet, daß $Z^1$, $Z^2$ und $Z^3$ gleichzeitig Kovalenzbindungen sind.

14. Verbindung nach Anspruch 12 oder 13, dadurch gekennzeichnet, daß in der Formel (11) die Gruppe $R^1$ oder/und $R^2$ eine solche der Formel (2)

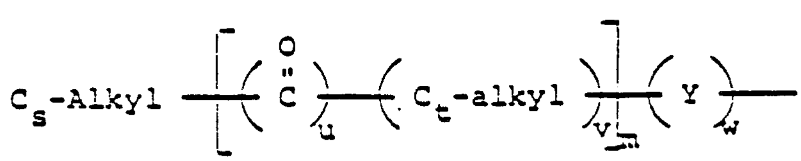

(2)

ist, in der die Indizes u, v, w gleich oder verschieden und Null oder Eins sind, m Eins oder Zwei ist, Y die Ketocarbonylgruppe (—C(O)—), die Oxycarbonylgruppe (—OC(O)—) oder die Carbonyloxygruppe (—C(O)O—) bedeutet und die Indizes s und t Zahlen von 1-12 mit der Massgabe bedeuten, dass die

Formel (2) insgesamt höchstens 12 C-Atome enthält und dass wenn w = 1 = u, dann v = 1 und t ≥ 2.

15. Verbindung nach Anspruch 12, 13 oder 14, dadurch gekennzeichnet, daß sie insgesamt höchstens zwei Ketocarbonylgruppen und insgesamt höchstens zwei Reste $X^1$ enthält.

16. Verbindung nach Anspruch 14 oder 15, dadurch gekennzeichnet, daß in der Formel (2) entweder w Null bedeutet und dann m = v = u = 1 sowie t ≤ 2, oder daß w Eins bedeutet und dann Y Ketocarbonyl darstellt und u = v = Null.

17. Verbindung nach einem der Ansprüche 12-16, dadurch gekennzeichnet, daß $R^1$ oder/und $R^2$ einen Substituenten $X^1$ enthält und dieser durch höchstens zwei Kettenatome vom benachbarten Ring getrennt ist.

18. Verbindung nach einem der Ansprüche 12-17, dadurch gekennzeichnet, daß höchstens eines von $R^1$, $R^2$ Wasserstoff oder $X^1$ bedeutet.

19. Verbindung nach einem der Ansprüche 13-17, dadurch gekennzeichnet, daß eines von $R^1$, $R^2$ der in Anspruch 14 angegebenen Formel (2) entspricht und das andere von $R^2$, $R^1$ eine $C_{1-12}$-Alkylkette bedeutet.

20. Verbindung nach einem der Ansprüche 13-17, dadurch gekennzeichnet, daß beide $R^1$, $R^2$ der in Anspruch 14 angegebenen Formel (2) entsprechen.

21. Verbindung nach einem der Ansprüche 12-17 oder 19-20, dadurch gekennzeichnet, daß $R^1$ und $R^2$ unterschiedliche Kettenlängen haben.

22. Verbindung nach einem der Ansprüche 12-21, dadurch gekennzeichnet, daß p oder/und r Null ist.

23. Verbindung nach Anspruch 13 gekennzeichnet durch die Formel

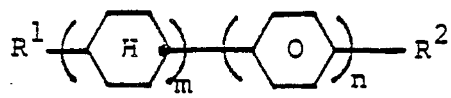

worin $R^1$ die Bedeutung der Formel (2), $R^2$ die in Anspruch 2 angegebene Bedeutung hat, m und n jeweils 0, 1 oder 2 bedeuten und m + n 2, 3 oder 4 ist.

24. Verbindung nach Anspruch 23, dadurch gekennzeichnet, daß m = 1 und n 1 oder 2 ist.

25. Verbindung nach Anspruch 23, dadurch gekennzeichnet, daß m = 2 und n = 1 ist.

26. Verbindung nach Anspruch 23, dadurch gekennzeichnet, daß m = 2 und n = 0 ist.

27. Verbindung nach einem der Ansprüche 23-26, dadurch gekennzeichnet, daß $R^1$ n-Alkanoyl mit 1-12 C-Atomen ist.

28. Verbindung nach einem der Ansprüche 23-27, dadurch gekennzeichnet, daß $R^2$ n-Alkyl oder n-Alkanoyl mit 1-12 C-Atomen ist.

29. Elektrooptisches Anzeigeelement, dadurch gekennzeichnet, daß es eine Flüssigkristallmischung nach einem der Ansprüche 1-11 enthält.

## Claims

1. Liquid crystal mixture for electrooptical displays with at least two liquid crystal components, characterized in that it contains at least one ketone compound containing the cross-polarizing structural constituent $-CH_2-CO-$, whereby α- and β-diketone structures are excluded.

2. Liquid crystal mixture according to Claim 1, characterized in that the mixture contains, as the crosspolarized compound, at least one anisotropic ketone compound of the formula (1)

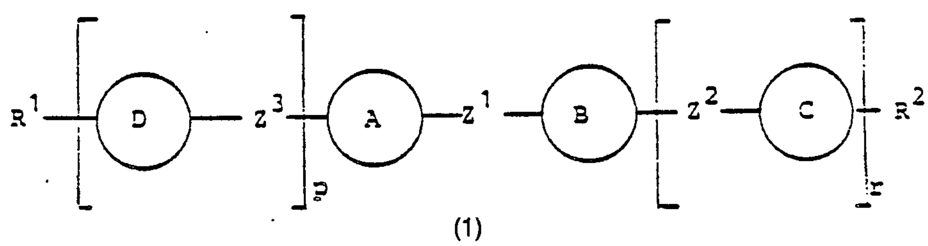

(1)

in which p and r are identical or different and are zero or one, the rings A, B, C and D are chosen from cycloaliphatic radicals of the formulae (1a) and (1b)

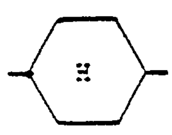

(Ia)

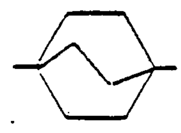

(Ib)

and aromatic radicals of the formulae (1c), (1d) and (1e)

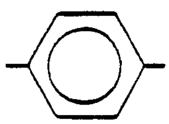
(Ic)

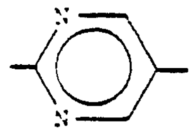
(Id)

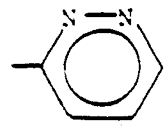
(Ie)

$Z^1$, $Z^2$ and $Z^3$ are covalent bonds or groups of the formulae

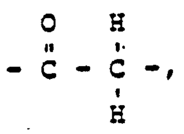, 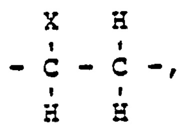, $-CH_2O-$ or $-C(O)O-$

or the reverse thereof, wherein X is hydrogen or the radical $X^1$, which is a fluorine or chlorine atom or the cyano group, and $R^1$ and $R^2$ are identical or different and are hydrogen, fluorine, chlorine, cyano or alkyl, alkoxy, alkoxycarbonyl or alkylcarbonyloxy groups, the alkyl part of which contains 1-12 C atoms in a straight or branched and optionally chiral chain, which is optionally substituted by one or two substituents chosen from fluorine, chlorine or cyano and/or contains 1 or 2 ketocarbonyl groups, two carbonyl groups always being separated from one another by at least two C atoms in the chain of the alkyl part and each C atom of the chain of the alkyl part carrying at most one substituent, with the provisos that

a) the molecule of the formula (1) contains a total of at least one ketocarbonyl group,

b) oxygen on the one hand and oxygen or the radical $X^1$ on the other hand are not at the same time bonded directly to a cycloaliphatic radical of the formulae (1a) and/or (1b) contained in the molecule of the formula (1),

c) a group of the formulae $—CH_2O—$ or $—CH(X^1)—$ is not bonded directly to the C atom of an aromatic radical of the formulae (1c), (1d) or (1e) contained in the molecule of the formula (1), except if $X^1$ is the fluorine atom, and

d) the molecule of the formula (1) contains at least one cycloaliphatic radical of the formulae (1a) and/or (1b).

3. Mixture according to Claim 2, characterized in that in the formula (1), the group $R^1$ and/or $R^2$ is a group of the formula (2)

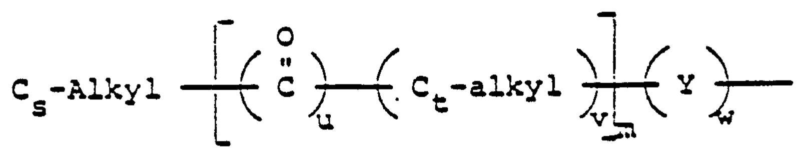
(2)

in which the indices u, v and w are identical or different and are zero or one, m is one or two, Y is the ketocarbonyl group (—C(O)—), the oxycarbonyl group (—OC(O)—) or the carbonyloxy group (—C(O)O—) and the indices s and t are numbers from 1 to 12, with the provisos that the formula (2) contains a total of not more than 12 C atoms and that if $w = 1 = u$ then $v = 1$ and $t \geq 2$.

4. Mixture according to Claim 2 or 3, characterized in that the keto compound of the formula (1) contains a total of not more than two ketocarbonyls and a total of not more than two radicals $X^1$.

5. Mixture according to Claim 3 or 4, characterized in that in formula (2), either w is zero and $m = v = u = 1$ and $t \leq 2$, or w is one and Y is ketocarbonyl and $u = v =$ zero.

6. Mixture according to one of Claims 2-5, characterized in that $R^1$ or/and $R^2$ contains a substituent $X^1$ and this is separated from the adjacent ring by not more than two chain atoms.

7. Mixture according to one of Claims 2-6, characterized in that at most one of the radicals $R^1$ and $R^2$ is hydrogen or $X^1$.

8. Mixture according to one of Claims 3-6, characterized in that one of the radicals $R^1$ and $R^2$ corresponds to the formula (2) given in Claim 3 and the other radical $R^2$ or $R^1$ is a $C_{1-12}$-alkyl chain.

9. Mixture according to one of Claims 3-6, characterized in that both radicals $R^1$ and $R^2$ correspond to the formula (2) given in Claim 3.

10. Mixture according to one of Claims 2-6 or 8-9, characterized in that $R^1$ and $R^2$ have different chain lengths.

11. Mixture according to one of Claims 2-10, characterized in that p or/and r is zero.

12. New anisotropic ketone compounds, characterized by the formula (11)

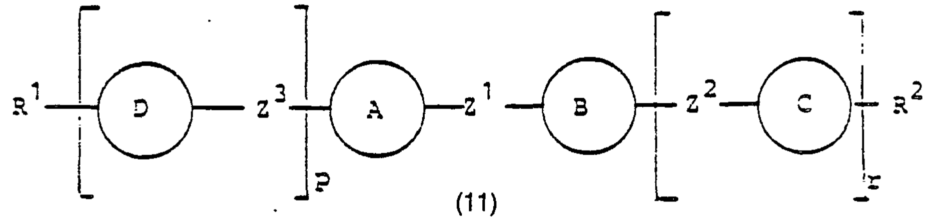

(11)

in which p and r are identical or different and are zero or one, the rings A, B, C and D are chosen from cycloaliphatic radicals of the formulae (1a) and (1b)

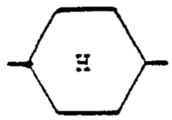

(Ia)

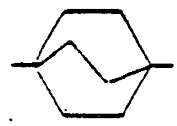

(Ib)

and aromatic radicals of the formulae (1c), (1d) and (1e)

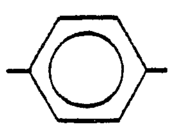

(Ic)

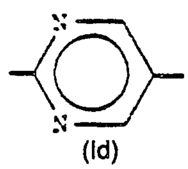

(Id)

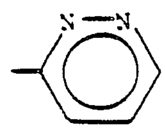

(Ie)

$Z^1$, $Z^2$ and $Z^3$ are covalent bonds or groups of the formulae

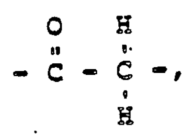, 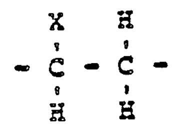, $-CH_2O-$ or $-C(O)O-$

or the reverse thereof, wherein X is hydrogen or the radical $X^1$, which is a fluorine or chlorine atom or the cyano group, and $R^1$ and $R^2$ are identical or different and are hydrogen, fluorine, chlorine, cyano or alkyl, alkoxy, alkoxycarbonyl or alkylcarbonyloxy groups, the alkyl part of which contains 1-12 C atoms in a straight or branched and optionally chiral chain, which is optionally substituted by one or two substituents chosen from fluorine, chlorine or cyano and/or contains 1 or 2 ketocarbonyl groups, two carbonyl groups always being separated from one another by at least two C atoms in the chain of the alkyl part and each C atom of the chain of the alkyl part carrying at most one substituent, with the provisos that

a) the molecule of the formula (11) contains a total of at least one ketocarbonyl group,

b) oxygen on the one hand and oxygen or the radical $X^1$ on the other hand are not at the same time bonded directly to a cycloaliphatic radical of the formulae (1a) and/or (1b) contained in the molecule of the formula (1),

c) a group of the formulae $—CH_2O—$ or $—CH(X^1)—$ is not bonded directly to the C atom of an aromatic radical of the formulae (1c), (1d) or (1e) contained in the molecule of the formula (11), except if $X^1$ is fluorine

d) the molecule of the formula (11) contains at least one cycloaliphatic radical of the formulae (1a) and/or (1b), and

e) $Z^1$, $Z^2$ and $Z^3$ are not simultaneously covalent bonds if p or r is zero, the molecule contains two radicals of the formula (1c) and one radical of the formula (1a) and $R^1$ and $R^2$ are chosen from $C_{1-11}$-alkyl—C(O)— and $C_{1-12}$-alkyl.

13. Compound according to Claim 12, characterized in that $Z^1$, $Z^2$ and $Z^3$ are simultaneously covalent bonds.

14. Compound according to Claim 12 or 13, characterized in that in formula (11), the group $R^1$ and/or $R^2$ is a group of the formula (2)

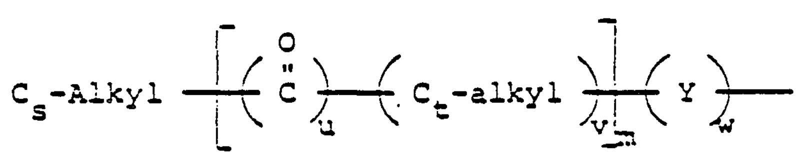

(2)

in which the indices u, v and w are indentical or different and are zero or one, m is one or two, Y is the ketocarbonyl group (—C(O)—), the oxycarbonyl group (—OC(O)—) or the carbonyloxy group (—C(O)O—) and the indices s and t are numbers from 1 to 12, with the proviso that the formula (2) contains a total of not more than 12 C atoms and that if $w = 1 = u$ then $v = 1$ and $t \geq 2$.

15. Compound according to Claim 12, 13 or 14, characterized in that it contains a total of not more than two ketocarbonyl groups and a total of not more than two radicals $X^1$.

16. Compound according to Claim 14 or 15, characterized in that in formula (2), either w is zero and $m = v = u = 1$ and $t \leq 2$, or w is one and Y is ketocarbonyl and $u = v =$ zero.

17. Compound according to one of Claims 12-16, characterized in that $R^1$ or/and $R^2$ contains a substituent $X^1$ and this is separated from the adjacent ring by not more than two chain atoms.

18. Compound according to one of Claims 12-17, characterized in that at most one of the radicals $R^1$ and $R^2$ is hydrogen or $X^1$.

19. Compound according to one of Claims 13-17, characterized in that one of the radicals $R^1$ and $R^2$ corresponds to the formula (2) given in Claim 14 and the other radical $R^2$ or $R^1$ is a $C_{1-12}$-alkyl chain.

20. Compound according to one of Claims 13-17, characterized in that the two radicals $R^1$ and $R^2$ correspond to the formula (2) given in Claim 14.

21. Compound according to one of Claims 12-17 or 19-20, characterized in that $R^1$ and $R^2$ have different chain lengths.

22. Compound according to one of Claims 12-21, characterized in that p or/and r is zero.

23. Compound according to Claim 13, characterized by the formula

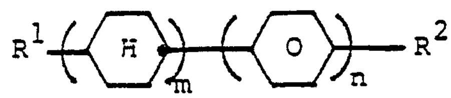

wherein $R^1$ has the meaning of the formula (2), $R^2$ has the meaning given in Claim 2, m and n are each 0, 1 or 2 and m + n is 2, 3 or 4.

24. Compound according to Claim 23, characterized in that m = 1 and n is 1 or 2.

25. Compound according to Claim 23, characterized in that m = 2 and n = 1.

26. Compound according to Claim 23, characterized in that m = 2 and n = 0.

27. Compound according to one of Claims 23-26, characterized in that $R^1$ is n-alkanoyl with 1-12 C atoms.

28. Compound according to one of Claims 23-27, characterized in that $R^2$ is n-alkyl or n-alkanoyl with 1-12 C atoms.

29. Electrooptical display element, characterized in that it contains a liquid crystal mixture according to one of Claims 1-11.

**Revendications**

1. Mélange à cristaux liquides pour affichages électro-optiques contenant au moins deux composants à cristaux liquides, caractérisé en ce qu'il contient au moins un composé cétonique contenant lui-même le constituant de structure à polarisation transversale $—CH_2—CO—$, les structures alpha- et bêta-dicétoniques étant exclues.

2. Mélange à cristaux liquides selon la revendication 1, caractérisé en ce que ce mélange contient, en tant que composé à polarisation transversale, au moins un composé cétonique anisotrope de formule (1)

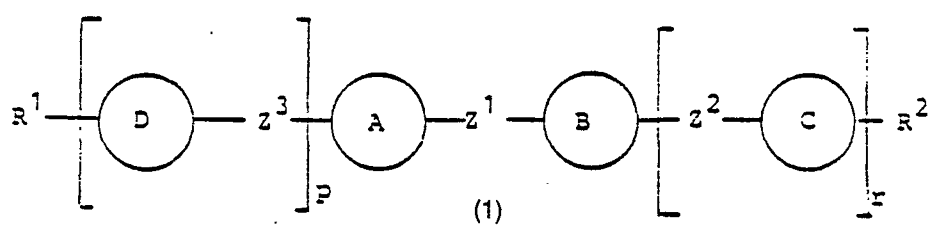

(1)

dans laquelle p et r, ayant des significations identiques ou différentes, sont chacun égaux à 0 ou 1, les cycles A, B, C, D sont choisis parmi les restes cycloaliphatiques de formules (1a), (1b)

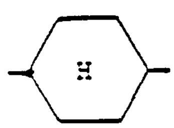

(Ia)

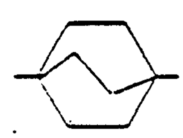

(Ib)

et les restes aromatiques de formules (1c), (1d), (1e)

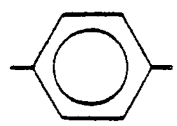
(Ic)

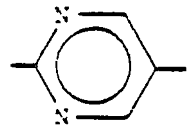
(Id)

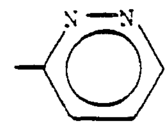
(Ie)

$Z^1$, $Z^2$, $Z^3$ représentent des liaisons covalentes ou des groupes de formules

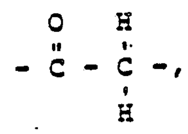 , 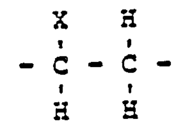 , $-CH_2O-$ ou $-C(O)O-$

ou leurs inverses, dans lesquels X représente l'hydrogène ou $X^1$ qui représente lui-même un atome de fluor ou de chlore ou le groupe cyano, et $R^1$, $R^2$, ayant des significations identiques ou différentes, représentent chacun l'hydrogène, le fluor, le chlore, un groupe cyano ou alkyle, alcoxy, alcoxycarbonyle ou alkylcarbonyloxy dont la partie alkyle contient 1 à 12 atomes de carbone en chaîne droite ou ramifiée et éventuellement chirale, portant éventuellement 1 ou 2 substituants choisis parmi le fluor, le chlore ou le groupe cyano et/ou contenant 1 à 2 groupes cétocarbonyle, deux groupes carbonyle étant toujours séparés l'un de l'autre par au moins 2 atomes de carbone de la chaîne de la partie alkyle, et chaque atome de carbone de la chaîne de la partie alkyle portant au maximum un substituant, avec les conditions supplémentaires suivantes :

a) la molécule de formule (1) contient au total au moins un groupe cétocarbonyle,

b) sur aucun reste cycloaliphatique de formules (1a) et/ou (1b) contenu dans la molécule de formule (1), il n'y a simultanément liaison directe de l'oxygène d'une part et liaison directe de l'oxygène ou du substituant $X^1$ d'autre part,

c) sur aucun reste aromatique de formules (1c), (1d) ou (1e) contenu dans la molécule de formule (1), un groupe de formules $—CH_2O—$ ou $—CH(X^1)—$ n'est relié directement par son atome de carbone, sauf lorsque $X^1$ représente l'atome de fluor, et

d) la molécule de formule (1) contient au moins un reste cycloaliphatique de formules (1a) et/ou (1b).

3. Mélange selon la revendication 2, caractérisé en ce que, dans la formule (1), le groupe $R^1$ et/ou $R^2$ est un groupe de formule (2)

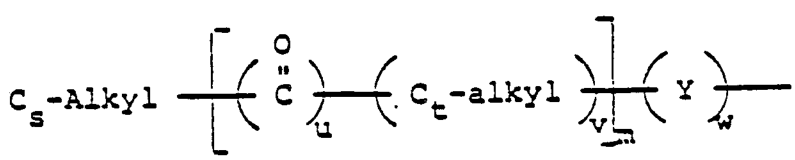
(2)

dans laquelle les indices u, v, w, identiques ou différents, sont égaux à 0 ou 1, m est égal à 1 ou 2, Y représente le groupe cétocarbonyle (—C(O)—), le groupe oxycarbonyle (—OC(O)—) ou le groupe carbonyloxy (—C(O)O—) et les indices s et t sont des nombres de 1 à 12, avec les conditions supplémentaires que, dans la formule (2), il y a au total 12 atomes de carbone au maximum et que, lorsque w = 1 = u, v = 1 et t est supérieur ou égal à 2.

4. Mélange selon la revendication 2 ou 3, caractérisé en ce que le composé cétonique de formule (1) contient au total deux groupes cétocarbonyle au maximum et au total deux groupes $X^1$ au maximum.

5. Mélange selon la revendication 3 ou 4, caractérisé en ce que, dans la formule (2), ou bien w est égal à 0 et alors m = v = u = 1, et t est inférieur ou égal à 2, ou bien w est égal à 1 et alors Y représente un groupe cétocarbonyle et u = v = 0.

6. Mélange selon l'une des revendications 2 à 5, caractérisé en ce que $R^1$ et/ou $R^2$ contient un substituant $X^1$ qui est séparé du cycle voisin par deux atomes de chaîne au maximum.

7. Mélange selon l'une des revendications 2 à 6, caractérisé en ce qu'un au maximum des symboles $R^1$, $R^2$ représente l'hydrogène ou $X^1$.

8. Mélange selon l'une des revendications 3 à 6, caractérisé en ce que l'un des symboles $R^1$, $R^2$ répond à la formule (2) de la revendication 3 et l'autre représente une chaîne alkyle en C1-C12.

9. Mélange selon l'une des revendications 3 à 6, caractérisé en ce que les deux symboles $R^1$, $R^2$

répondent à la formule (2) de la revendication 3.

10. Mélange selon l'une des revendications 2 à 6 ou 8 à 9, caractérisé en ce que $R^1$ et $R^2$ ont des longueurs de chaînes différentes.

11. Mélange selon l'une des revendications 2 à 10, caractérisé en ce que p et/ou r est égal à 0.

12. Nouveaux composés cétoniques anisotropes, caractérisés par la formule (11)

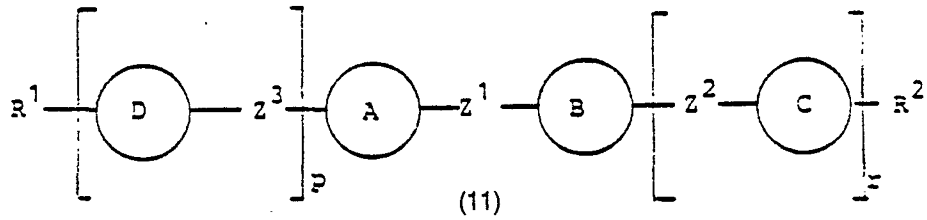

(11)

dans laquelle p et r, identiques ou différents, sont égaux chacun à 0 ou 1, les cycles A, B, C, D sont choisis parmi les groupes cycloaliphatiques de formules (1a), (1b)

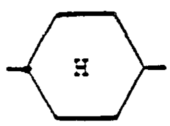

(Ia)

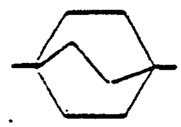

(Ib)

et les groupes aromatiques de formules (1c), (1d), (1e)

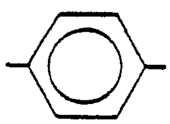

(Ic)

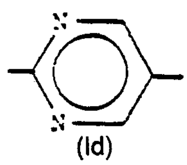

(Id)

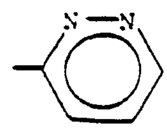

(Ie)

$Z^1$, $Z^2$ et $Z^3$ représentent des liaisons covalents ou des groupes de formules

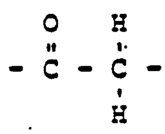

,

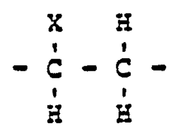

, $-CH_2O-$ ou $-C(O)O-$

ou leurs inverses, dans lesquels X représente l'hydrogène ou $X^1$ qui représente lui-même un atome de fluor ou de chlore ou le groupe cyano, et $R^1$, $R^2$, ayant des significations identiques ou différentes, représentent chacun l'hydrogène, le fluor, le chlore, un groupe cyano ou alkyle, alcoxy, alcoxycarbonyle ou alkylcarbonyloxy dont la partie alkyle contient 1 à 12 atomes de carbone en chaîne droite ou ramifiée et, le cas échéant, chirale, qui est éventuellement substituée par un ou deux substituants choisis parmi le fluor, le chlore ou les groupes cyano, et/ou contient 1 à 2 groupes cétocarbonyle, deux groupes carbonyle étant toujours séparés l'un de l'autre par au moins deux atomes de carbone de la chaîne de la partie alkyle et chaque atome de carbone de la chaîne de la partie alkyle portant au maximum un substituant, avec les conditions supplémentaires que

a) la molécule de formule (11) contient au total au moins un groupe cétocarbonyle,

b) sur aucun reste cycloaliphatique de formules (1a) et/ou (1b) contenu dans la molécule de formule (11), il n'y a simultanément liaison directe de l'oxygène d'une part et liaison directe de l'oxygène ou du groupe $X^1$ d'autre part,

c) sur aucun reste aromatique de formules (1c), (1d) ou (1e) contenu dans la molécule de formule (11), il n'y a liaison directe d'un groupe de formules $—CH_2O—$ ou $—CH(X^1)—$ par son atome de carbone, sauf lorsque $X^1$ représente le fluor,

d) la molécule de formule (11) contient au moins un reste cycloaliphatique de formules (1a) et/ou (1b), et

e) $Z^1$, $Z^2$ et $Z^3$ ne représentent pas simultanément des liaisons covalentes, lorsque p ou r est égal à 0, la molécule contient deux restes de formule (1c) et un reste de formule (1a), et $R^1$, $R^2$ sont choisis parmi les groupes (alkyle en C1-C11)—C(O)— et alkyle en C1-C12.

13. Composé selon la revendication 12, caractérisé en ce que $Z^1$, $Z^2$ et $Z^3$ représentent tous des

liaisons covalentes.

14. Composé selon la revendication 12 ou 13, caractérisé en ce que, dans la formule (11), le groupe $R^1$ et/ou $R^2$ répond à la formule (2)

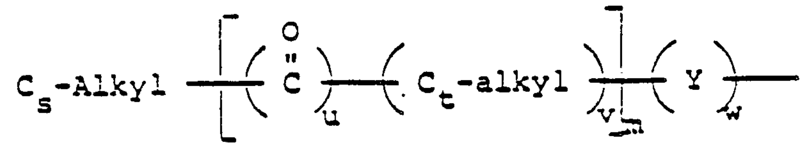

(2)

dans laquelle les indices u, v, w ont des significations identiques ou différentes et sont égaux à 0 ou 1, m est égal à 1 ou 2, Y représente le groupe cétocarbonyle (—C(O)—), le groupe oxycarbonyle (—OC(O)—) ou le groupe carbonyloxy (—C(O)—O—) et les indices s et t sont des nombres de 1 à 12, avec les conditions supplémentaires que la formule (2) contient au total au maximum 12 atomes de carbone et que, lorsque w = 1 = u, v = 1 et t est supérieur ou égal à 2.

15. Composé selon la revendication 12, 13 ou 14, caractérisé en ce qu'il contient au total au maximum deux groupes cétocarbonyle et au total au maximum deux restes $X^1$.

16. Composé selon la revendication 14 ou 15, caractérisé en ce que, dans la formule (2), ou bien w est égal à 0 et alors m = v = u = 1 et t est inférieur ou égal à 2, ou bien w est égal à 1 et alors Y représente un groupe cétocarbonyle et u = v = 0.

17. Composé selon l'une des revendications 12 à 16, caractérisé en ce que $R^1$ et/ou $R^2$ contient un substituant $X^1$ qui est séparé par deux atomes de chaîne au maximum du cycle voisin.

18. Composé selon l'une des revendications 12 à 17, caractérisé en ce qu'un au maximum des symboles $R^1$, $R^2$ représente l'hydrogène ou $X^1$.

19. Composé selon l'une des revendications 13 à 17, caractérisé en ce que l'un des symboles $R^1$, $R^2$ répond à la formule (2) de la revendication 14 et l'autre représente une chaîne alkyle en C1-C12.

20. Composé selon l'une des revendications 13 à 17, caractérisé en ce que les deux symboles $R^1$, $R^2$ répondent à la formule (2) de la revendication 14.

21. Composé selon l'une des revendications 12 à 17 ou 19 ou 20, caractérisé en ce que $R^1$ et $R^2$ ont des longueurs de chaîne différentes.

22. Composé selon l'une des revendications 12 à 21, caractérisé en ce que p et/ou r est égal à 0.

23. Composé selon la revendication 13, caractérisé par la formule

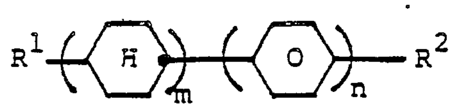

dans laquelle $R^1$ a la signification de la formule (2), $R^2$ a la signification indiquée dans la revendication 2, m et n sont chacun égaux à 0, 1 ou 2 et m + n est égal à 2, 3 ou 4.

24. Composé selon la revendication 23, caractérisé en ce que m est égal à 1 et n est égal à 1 ou 2.

25. Composé selon la revendication 23, caractérisé en ce que m est égal à 2 et n est égal à 1.

26. Composé selon la revendication 23, caractérisé en ce que m est égal à 2 et n à 0.

27. Composé selon l'une des revendications 23 à 26, caractérisé en ce que $R^1$ représente un groupe n-alcanoyle en C1-C12.

28. Composé selon l'une des revendications 23 à 27, caractérisé en ce que $R^2$ représente un groupe n-alkyle ou n-alcanoyle en C1-C12.

29. Elément d'affichage électro-optique caractérisé en ce qu'il contient un mélange à cristaux liquides selon l'une des revendications 1 à 11.